# EUROPEAN PATENT APPLICATION

(11) **EP 2 765 711 A1**
(43) Date of publication of application: **13.08.2014**
(21) Application number: 12838586.1
(22) Date of filing: 03.10.2012
(51) Int. Cl.: H04B 1/40, H04B 1/707, H04J 1/00, H04J 11/00, H04W 88/08

(54) **BASE STATION DEVICE AND COMMUNICATION SYSTEM**

(30) Priority: 06.10.2011 JP 2011221684
(71) Applicant: Mitsubishi Electric Corporation, Tokyo 100-8310 (JP)
(72) Inventor: SUEMITSU, Taisei, Tokyo 100-8310 (JP)
(74) Representative: Sajda, Wolf E.
(86) International application number: PCT/JP2012/075602
(87) International publication number: WO 2013/051592

(57) **Abstract**

The present invention has an object to provide a base station device capable of radio communication with acommunication terminal device with as little power consumption as possible, and a communication system including the base station device. A CPU (83) is connected with an external RAM, so that the CPU (83) is caused to function as a data exchange unit by a software program. When a second 3G circuit unit (82) performs a communication process such as a process of framing a frame protocol, the CPU (83) is caused to access the external RAM such that the data required for the communication process is provided to the second 3G circuit unit (82). Also, the CPU (83) causes the data processed by the second 3G circuit unit (82) to be stored in the external RAM. This suppresses an increase in circuit size of the second 3G circuit unit (82), achieving a base station device (2) capable of communication with a communication terminal device with as little power consumption as possible.

## Description

### Technical Field

The present invention relates to a base station device capable of radio communication with a communication terminal device in a plurality of communication systems and a communication system including the base station device.

### Background Art

In the 3rd generation partnership project (3GPP) that is the standard organization regarding the mobile communication system, the long term evolution (abbreviated as LTE) system is studied as a 3.9th generation (abbreviated as 3.9G) communication system. Also, the LTE-advanced system obtained by upgrading the LTE system is studied.

The LTE system is obtained by upgrading the wideband code division multiple access (W-CDMA) system being one of the third generation (abbreviated as 3G) communication systems (hereinafter, also referred to as "3G systems"). While circuit switched (abbreviated as CS) communications are provided in the W-CDMA mobile communication system, in the mobile communication systems of the LTE communication system or later system, such as the LTE and LTE-advanced systems, circuit switched communications are not provided.

Thus, for example, the process referred to as CS fallback (abbreviated as CSFB) is performed in a case where, voice communications of a mobile communication terminal device (hereinafter, also referred to as a "communication terminal device") being located in a mobile communication system of the LTE communication system or later system support only the W-CDMA system or in a case where a communication terminal device desires voice communications in the W-CDMA system. The CSFB process switches the communication of the LTE communication system or later system to the W-CDMA system communication (e.g., see Non-Patent Documents 1 to 5).

The technologies related to the communication devices for use in mobile communication systems are disclosed in, for example, Patent Documents 1 to 9. As an example, Patent Documents 1 to 3 disclose the technologies for reducing the power consumption in a mobile communication system that supports a plurality of communication system as described above.

In the technology disclosed in Patent Document 1, the frequency of handoffs of a radio communication terminal that supports two different communication systems is reduced, to thereby reduce the power consumption of the radio communication terminal.

In the technology disclosed in Patent Document 2, a communication terminal capable of being connected to a plurality of different radio communication systems receives, during a stand-by state, a notification of an incoming call through the first radio communication system, with a power source for a first radio communication system among a plurality of communication systems being turned on and power sources for the other communication systems being turned off. This results in a reduction in power consumption of the communication terminal during stand-by.

Patent Document 3 discloses a radio terminal device and a base station that support a plurality of radio systems, for example, both of the global system for mobile (GSM; registered trademark) and W-CDMA system. In the technology disclosed in Patent Document 3, if a radio terminal device moves and belongs to a new neighbour cell of a radio system that is not during communication, radio communication means supporting a radio system that is not during communication is activated, and the information on its neighbour cells is obtained, to thereby cut back the power consumption of the radio terminal device.

Patent Document 4 discloses the technology for solving a problem that communication devices such as cellular phones sacrifice the performance as a central processing unit (abbreviated as CPU) or external expandability and thus cannot take full advantage of additional functions and a problem that a certain function cannot be provided to such communication devices due to limitations, for further miniaturization for portability.

The communication device disclosed in Patent Document 4 is configured such that an execution program is recorded in a read only memory (abbreviated as ROM) and the CPU reads the execution program from the ROM and sequentially interprets instructions contained in the execution program, thereby controlling the entire device.

The radio communication device disclosed in Patent Document 5 is configured to reconstruct, in a software radio process of a digital processing unit, the circuitry of the digital processing unit in accordance with the RF resource allocation method, thereby flexibly and efficiently performing the operation of a signal processing system.

Patent Document 5 describes as the methods of changing the circuitry of a software radio process, (1) the method of downloading the software information in which the contents of the processing circuit are described to reconfigure a circuit, (2) the method of downloading only the information for controlling a processing circuit to reconfigure a circuit, and (3) the method of reconfiguring a circuit in response to a request, using the circuit information stored therein or in an external memory.

The radio communication device disclosed in Patent Document 5 is configured to, if a digital processing unit does not perform a software radio process, provide all probable decoding circuits in advance and prepare them to operate, so that all the processing circuits are turned on/off on demand.

Patent Document 6 discloses a network system, access point device, a communication module for terminals, access control method, and an access control program, which can prevent illegal access while being easily managed and compensates for the vulnerability of a cipher system to improve security, and a record medium that records an access control program.

In the portable information terminal device disclosed in Patent Document 7, data management means obtains image data management information of a portable communication terminal being a connection destination, image list creation means causes display means to display an image list created based on the image data management information, and the data management means stores, in an image data storage unit, image data selected upon an input from input means.

As a result, only the required images of the image data stored in the portable communication terminal can be swiftly transported, thereby simplifying the process.

Patent Document 8 discloses the management device that functions as a base station. Patent Document 9 is a patent publication of Patent Document 8.

The management devices disclosed in Patent Documents 8 and 9 are configured as devices including an arithmetic processing unit (CPU), a main memory (RAM), a read only memory (ROM), an input/output device (I/O), and an external storage such as a hard disk device. The ROM, external storage, or the like stores the program for causing an information processor to function as a management device or the program for causing a computer to execute an information providing method. This program is provided in the main memory and is executed by the CPU, so that the management device is achieved.

The technologies disclosed in Patent Documents 8 and 9 configure the management device as described above, and thus provide the information providing system allowing a user to easily obtain address information from a desired address information providing device to obtain information from a communication network based on this address information even if a plurality of address information providing devices are located adjacent to each other.

### Prior Art Documents

### Patent Documents

- Patent Document 1:: Japanese Patent No. 3 916 554
- Patent Document 2:: Japanese Patent No. 4 190 982
- Patent Document 3:: WO 2008/081548
- Patent Document 4:: Japanese Patent Application Laid-Open JP-A-2007-116 524
- Patent Document 5:: Japanese Patent Application Laid-Open JP-A-2006-148 388
- Patent Document 6:: Japanese Patent Application Laid-Open JP-A-2005-204 232
- Patent Document 7:: Japanese Patent Application Laid-Open JP-A-2002-176 471
- Patent Document 8:: Japanese Patent Application Laid-Open JP-A-2004-078 277
- Patent Document 9:: Japanese Patent No. 4 272 395

### Non-Patent Documents

Non-Patent Document 1: 3GPP TS23.060 V10.3.0
Non-Patent Document 2: 3GPP TS23.401 V10.3.0
Non-Patent Document 3: 3GPP TS23.221 V10.0.0
Non-Patent Document 4: 3GPP TS24.008 V10.2.0
Non-Patent Document 5: 3GPP TS23.272 V10.3.1

### Summary of the Invention

### Problems to be Solved by the Invention

The technologies disclosed in Patent Documents 1 to 3 are technologies for reducing the power consumption of a communication terminal device. As the method of reducing the power consumption of the base station device, it is conceivable that in a communication system supporting, for example, two communication systems, a base station device may be operated using only the function of one communication system if a communication terminal device is controlled to perform only the communication in this one communication system.

However, this method is only effective if all the communication terminal devices support both communication systems. For example, if another communication terminal device communicating with the same base station device supports only the other communication system, the base station device has to operate the functions of the both communication systems. Thus, the power consumption of the base station device cannot be reduced.

As the method of reducing the power consumption of a base station device, it is conceivable to reduce the size of the circuit constituting the base station device. However, Patent Documents 1 to 9 described above do not disclose the technology for reducing a circuit size in a communication system used as the base station device.

For example, as described above, the communication device disclosed in Patent Document 4 is configured such that a CPU reads its execution program from a ROM and successively interprets the instructions contained in the execution program, thereby controlling the entire device. The CPU reads the execution program from the ROM by the software program.

The base station device performs communications with a large number of communication terminal devices at the same time, and thus need to process large quantities of data. Processing of large quantities of data needs external storage means for temporarily storing data.

However, the ROM used in the communication device disclosed in Patent Document 4 is dedicated to reading and cannot perform writing, and thus cannot be used as external storage means for processing large quantities of data. In other words, the communication device disclosed in Patent Document 4 is not configured to carry out, by a software program, the transmission/reception of data to/from the external storage means that is used for processing large quantities of data. Therefore, the communication device disclosed in Patent Document 4 needs to process large quantities of data in the communication device and thus cannot reduce a circuit size.

The radio communication device disclosed in Patent Document 5 is configured to store not data but circuit information in an external memory. The radio communication device disclosed in Patent Document 5 is yet to be configured so as to reduce a circuit size and process large quantities of data.

The access point device disclosed in Patent Document 6 is configured not to store data in the external storage means but to store a program in a record medium. The access point device disclosed in Patent Document 6 is yet to be configured so as to reduce a circuit size and process large quantities of data.

The portable information terminal device disclosed in Patent Document 7 is not configured to transmit/receive data to/from the external storage means that is used for processing large quantities of data by a software program, similarly to the communication device disclosed in Patent Document 4 described above.

In other words, the portable information terminal device disclosed in Patent Document 7 is not configured to transmit/receive data to/from the external storage means by a software program to use an interface having limited access with a circuit. Thus, the circuit size cannot be reduced even by the technology disclosed in Patent Document 7.

The management devices disclosed in Patent Documents 8 and 9 are configured not to store data in an external storage device but to store the program in the ROM, external store device, or the like as described above. The management devices disclosed in Patent Documents 8 and 9 are not configured so as to reduce a circuit size.

As described above, Patent Documents 1 to 9 do not disclose the technology for reducing a circuit size in a communication device that is used as the base station device. Thus, the use of the technologies disclosed in Patent Documents 1 to 9 cannot reduce the power consumption of the base station device.

The present invention has an object to provide a base station device capable of radio communication with a communication terminal device with as little power consumption as possible, and a communication system including the base station device.

### Means to Solve the Problems

A base station device of the present invention is configured to perform radio communication with a communication terminal device, which includes: a communication processing unit that is adapted to perform a communication process to communicate with the communication terminal device; and a data exchange unit that is adapted to perform at least one of reading and storing of data from and in an external storage that temporarily stores the data, to thereby exchange the data with the communication processing unit, the data being handled in the communication process by the communication processing unit, wherein the data exchange unit is implemented by a software program.

A communication system of the present invention includes the base station device of the present invention, and a communication terminal device configured to perform radio communication with the base station device of the present invention.

### Effects of the Invention

The base station device of the present invention performs the communication process for communication with the communication terminal device by the communication processing unit. The data to be handled by the communication processing unit through the communication process is read from the external storage by the data exchange unit implemented by a software program or is stored in the external storage, to thereby be exchanged between the communication processing unit and the data exchange unit.

The communication processing unit accesses the external storage by the data exchange unit implemented by a software program, and thus needs not to access the external storage. This results in a reduction in size of the circuit implemented as the communication processing unit, reducing the power consumption. Thus, a base station device capable of radio communication with a communication terminal device can be achieved with as little power consumption as possible. Also, a base station device can be miniaturized easily.

According to the communication system of the present invention, a communication system is configured to include the base station device of the present invention that is excellent as described above and a communication terminal device. This reduces the power consumption of the base station device as much as possible. Also, the base station device can be miniaturized easily.

These and other objects, features, aspects and advantages of the present invention will become more apparent from the following detailed description of the present invention when taken in conjunction with the accompanying drawings.

### Brief Description of the Drawings

- FIG. 1: is a block diagram showing a configuration of a base station device 1 of the underlying technology.
- FIG. 2: is a block diagram showing a configuration of a base station device 2 according to a first embodiment of the present invention.
- FIG. 3: is a sequence diagram showing an operating procedure of a downlink legacy process in an FP process of a W-CDMA system in a case where an external RAM is connected to a second 3G circuit unit 82.
- FIG. 4: is a sequence diagram showing an operating procedure of a downlink legacy process in the FP process of the W-CDMA system in a case where an external RAM is connected to a CPU 83.
- FIG. 5: is a sequence diagram showing an operating procedure of a HSDPA process in the FP process of the W-CDMA system in the case where an external RAM is connected to the second 3G circuit unit 82.
- FIG. 6: is a sequence diagram showing an operating procedure of the HSDPA process in the FP process of the W-CDMA system in the case where an external RAM is connected to the CPU 83.
- FIG. 7: is a sequence diagram showing an operating procedure in a case where the FP process is processed by the CPU 83.
- FIG. 8: is a block diagram showing a configuration of a segment division unit 103 that performs a segment division process in the processes shown in FIGS. 3 to 7.
- FIG. 9: is a diagram showing a state in which FP data is divided into segments.
- FIG. 10: is a diagram showing a format of data to be processed in an IP process.
- FIG. 11: is a diagram showing a format when data is stored from a segment division unit to an external RAM.
- FIG. 12: is a block diagram showing a configuration for performing a header analysis process.
- FIG. 13: is a block diagram showing a configuration for performing a payload process.
- FIG. 14: is a block diagram showing an overall configuration of the base station device 2 including the CPU 83 and second 3G circuit unit 82, and a first 3G circuit unit 81.
- FIG. 15: is a diagram for describing timings of the second 3G circuit unit 82 and a CPU I/F.
- FIG. 16: is a block diagram showing a configuration of the second 3G circuit unit 82.
- FIG. 17: is a block diagram showing a configuration including the CPU 83 and an external RAM 110.
- FIG. 18: is a sequence diagram showing an operating procedure of an uplink legacy process in the FP process of the W-CDMA system in the case where an external RAM is connected to the second 3G circuit unit 82.
- FIG. 19: is a sequence diagram showing an operating procedure of the uplink legacy process in the FP process of the W-CDMA system in the case where an external RAM is connected to the CPU 83.
- FIG. 20: is a diagram showing a detailed configuration of the second 3G circuit unit 82.
- FIG. 21: is a diagram showing a configuration for performing a control frame process.
- FIG. 22: is a diagram for describing timings of the second 3G circuit unit 82 and CPU I/F.
- FIG. 23: is a diagram showing an overall configuration including the CPU 83, external RAM 110, second 3G circuit unit 82, and a first 3G circuit unit 81 in the FP process of the uplink legacy process.
- FIG. 24: is a sequence diagram showing an operating procedure of a legacy process in a control frame process in the case where an external RAM is connected to the second 3G circuit unit 82.
- FIG. 25: is a sequence diagram showing an operating procedure of the legacy process in the control frame process in the case where an external RAM is connected to the CPU 83.
- FIG. 26: is a sequence diagram showing another example of the operating procedure in the LG process in the control frame process in the case where an external RAM is connected to the second 3G circuit unit 82.
- FIG. 27: is a sequence diagram showing an operating procedure in a case where an external RAM is connected to the CPU 83 such that the CPU 83 and second 3G circuit unit 82 are in charge of an entire control process.
- FIG. 28: is a sequence diagram showing an operating procedure in a case where an external RAM is connected to the CPU 83 so as to be in charge of an entire control process.
- FIG. 29: is a block diagram showing a configuration of a base station device 3 according to a fourth embodiment of the present invention.
- FIG. 30: is a block diagram showing a configuration of a base station device 4 according to a fifth embodiment of the present invention.

### Description of Embodiments

### Underlying technology

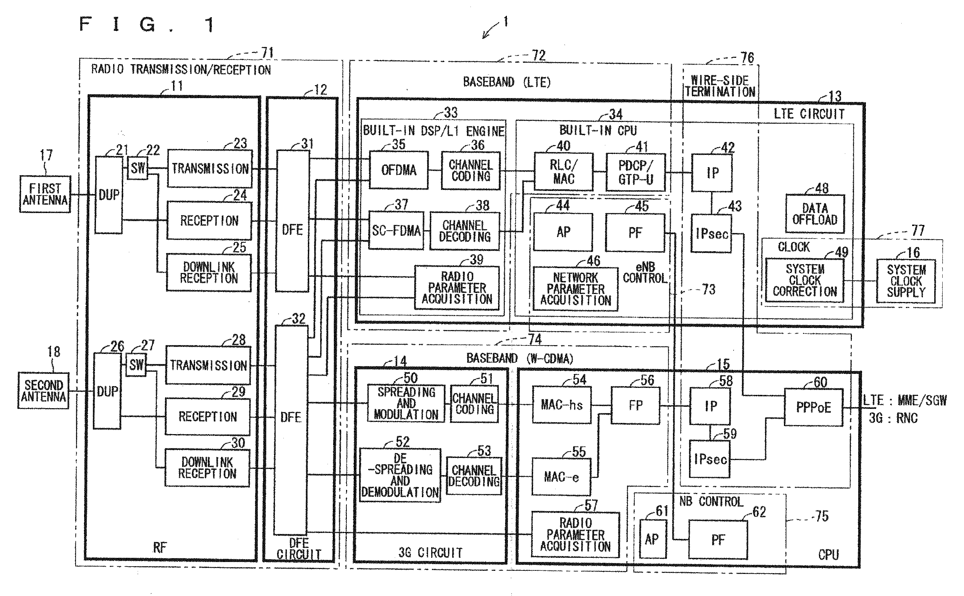

Prior to the description of a base station device of the present invention, a base station device being an underlying technology of the present invention will be described. FIG. 1 is a block diagram showing a configuration of a base station device 1 of the underlying technology. The base station device 1 has a configuration including a radio frequency (abbreviated as RF) unit 11, a digital front end (abbreviated as DFE) circuit unit 12, an LTE circuit unit 13, a 3G circuit unit 14, a central processing unit (CPU) 15, a system clock supply unit 16, a first antenna 17, and a second antenna 18.

The RF unit 11 includes a first duplexer (abbreviated as DUP) unit 21, a first switch (abbreviated as SW) unit 22, a first radio transmission unit 23, a first radio reception unit 24, a first downlink radio reception unit 25, a second duplexer (abbreviated as DUP) unit 26, a second switch (abbreviated as SW) unit 27, a second radio transmission unit 28, a second radio reception unit 29, and a second downlink radio reception unit 30.

The DFE circuit unit 12 includes a first DFE unit 31 and a second DFE unit 32. The DFE circuit unit 12 is implemented in, for example, a field programmable gate array (abbreviated as FPGA) or application specific integrated circuits (abbreviated as ASICs).

The LTE circuit unit 13 includes a built-in digital signal processor (abbreviated as DSP)/L1 engine unit 33 and a built-in CPU 34. The built-in DSP/L1 engine unit 33 includes an orthogonal frequency division multiple access (abbreviated as OFDMA) unit 35, a channel coding unit for LTE 36, a single carrier-frequency division multiple access (abbreviated as SC-FDMA) unit 37, a channel decoding unit for LTE 38, and a radio parameter acquisition unit for LTE 39.

The built-in CPU 34 includes a radio link control (abbreviated as RLC)/media access control (abbreviated as MAC) unit 40, a packet data convergence protocol (abbreviated as PDCP)/general packet radio service tunneling protocol-user (abbreviated as GTP-U) unit for user plane 41, an Internet protocol (abbreviated as IP) processing unit (hereinafter, merely referred to as an "IP unit" as well) for LTE 42, an Internet protocol security (IP security, abbreviated as IPsec) unit for LTE 43, an application (abbreviated as AP) unit for LTE 44, a platform (abbreviated as PF) unit for LTE 45, a network parameter acquisition unit 46, a data offload unit 48, and a system clock correction unit 49.

The 3G circuit unit 14 includes a spreading and modulation unit 50, a channel coding unit for 3G 51, a de-spreading and demodulation unit 52, and a channel coding unit for 3G 53.

The CPU 15 includes a media access control unit for high speed downlink packet access (abbreviated as HSDPA) (medium access control-HSDPA, abbreviated as MAC-hs) 54, a media access control unit for enhanced uplink (abbreviated as EUL) (abbreviated as MAC-e) 55, a frame protocol (abbreviated as FP) processing unit (hereinafter, merely referred to as "FP unit" as well) 56, a radio parameter acquisition unit for 3G 57, an IP unit for 3G 58, an IPsec unit for 3G 59, a point to point protocol over Ethernet (registered trademark; abbreviated as PPPoE) unit 60, an AP unit for 3G 61, and a PF unit for 3G 62.

The RF unit 11 and DFE circuit unit 12 constitute a radio transmission/reception unit 71. The radio transmission/reception unit 71 converts a baseband transmission signal to be transmitted into a radio frequency signal. The radio transmission/reception unit 71 converts the reception radio frequency signal received into a reception baseband signal. The radio transmission/reception unit 71 is formed of a circuit implemented in the FPGA or ASIC and RF components.

Of the LTE circuit unit 13, the built-in DSP/L1 engine unit 33 and the RLC/MAC unit 40 and PDCP/GTP-U unit 41 of the built-in CPU 34 constitute a baseband unit for LTE 72. The baseband unit for LTE 72 functions as a baseband unit for LTE.

Of the LTE circuit unit 13, the AP unit for LTE 44, PF unit for LTE 45, and network parameter acquisition unit 46 of the built-in CPU 34 constitute an evolved node base station (abbreviated as eNB) control unit 73. The eNB control unit 73 controls a part that functions as an eNB being a base station device in the LTE mobile communication system, and performs a call process, monitors a call process, sets and monitors circuits, monitors maintenance, and manages a state, which are related to the functions supporting the LTE system (hereinafter, also referred to as "LTE-side functions").

The 3G circuit unit 14, the MAC-hs unit 54, MAC-e unit 55, FP unit 56, and radio parameter acquisition unit for 3G 57 of the CPU 15 constitute a baseband unit for 3G 74. The baseband unit for 3G 74 functions as a baseband unit for W-CDMA.

The AP unit for 3G 61 and PF unit for 3G 62 of the CPU 15 constitute an NB control unit 75. The NB control unit 75 controls a part that functions as a node B (hereinafter, also referred to as "NB") being a base station device in the 3G mobile communication system, and controls a call, monitors a call process, sets and manages circuits, monitors maintenance, and manages a state, which are related to the functions supporting the 3G system (also referred to as "3G-side functions").

The IP unit for LTE 42 and IPsec unit for LTE 43 of the built-in CPU 34 of the LTE circuit unit 13 and the IP unit for 3G 58, IPsec unit for 3G 59, and PPPoE unit 60 of the CPU 15 constitute a wire-side termination unit 76. The wire-side termination unit 76 terminates signals of the Ethernet (registered trademark) and IP. The wire-side termination unit 76 supports an IPsec function, and a device reset function when an emergency (abbreviated as EM) signal is received from an entity of higher layer such as an operation system (abbreviated as OPS), AP, PF, and core network.

The system clock correction unit 49 of the built-in CPU 34 of the LTE circuit unit 13 constitutes a clock unit 77 together with the system clock supply unit 16 to be connected to the system clock correction unit 49. In order to generate a reference clock signal to be used in, for example, the radio transmission/reception unit 71, baseband unit for LTE 72, and baseband unit for 3G 74, the clock unit 77 introduces a correction system using a global positioning system (abbreviated as GPS) or a network time protocol (abbreviated as NTP) server to generate highly stable reference timings.

The first DUP unit 21 of the RF unit 71 is connected to the first antenna 17. The first DUP unit 21 is a duplexer for performing the transmission of transmission signals and the reception of reception signals with one antenna, specifically, the first antenna 17. The first DUP unit 21 includes a transmission filter for passing therethrough only the signals of frequency bands for use in transmission among predetermined frequency bands, and a reception filter for passing therethrough only the signals of frequency bands for use in reception among the predetermined frequency bands.

The first SW unit 22 switches between the process of transmitting RF signals of downlink user data output from the first radio transmission unit 23 and the process of receiving RF signals of a downlink frequency band by the first downlink radio reception unit 25.

The first radio transmission unit 23 generates an RF signal of the downlink user data based on a signal provided from the first DFE unit 31 and transmits the generated RF signal through the first SW unit 22, first DUP unit 21, and first antenna 17.

The first radio reception unit 24 receives a reception signal provided from the first DUP unit 21 through the first antenna 17 and provides it to the first DFE unit 31.

The first downlink radio reception unit 25 generates an RF signal of the downlink frequency band based on the reception signal received through the first antenna 17 and provided from the first DUP unit 21, and then provides the generated RF signal to the first DFE unit 31.

The second DUP unit 26 of the RF unit 11 is connected to the second antenna 18. The second DUP unit 26 is a duplexer for performing the transmission of transmission signals and the reception of reception signals with one antenna, specifically, the second antenna 18. The second DUP unit 26 includes a transmission filter for passing therethrough only the signals of frequency bands for use in transmission among predetermined frequency bands, and a reception filter for passing therethrough only the signals of frequency bands for use in reception among the predetermined frequency bands.

The second SW unit 27 switches between the process of transmitting the RF signals of the downlink user data output from the second radio transmission unit 28 and the process of receiving RF signals of the downlink frequency band by the second downlink radio reception unit 30.

The second radio transmission unit 28 generates an RF signal of the downlink user data based on the signal provided from the second DFE unit 32, and then transmits the generated RF signal through the second SW unit 27, second DUP unit 26, and second antenna 18.

The second radio reception unit 29 receives the reception signal provided from the second DUP unit 26 through the second antenna 18 and provides it to the second DFE unit 32.

The second downlink radio reception unit 30 generates an RF signal of the downlink frequency band based on the reception signal received through the second antenna 18 and provided from the second DUP unit 26, and then provides the generated RF signal to the second DFE unit 32.

The first DFE unit 31 and second DFE unit 32 of the DFE circuit unit 12 are implemented by digital filters such as finite impulse response (abbreviated as FIR) filters. The second DFE unit 32 limits the bands of the signals compatible with the 3G method (hereinafter, also referred to as "3G signals") and signals compatible with the LTE system (hereinafter, also referred to as "LTE signals") in the frequency bands of baseband signals.

The first DFE unit 31 individually takes out, in the transmission process, the 3G signal and LET signal in frequency separation between the 3G signal and LTE signal. The first DFE unit 31 performs, in the reception process, the process of separating the 3G signal band and LTE signal band with a digital filter on the signals obtained by down-converting the signals of wideband including the 3G signal area and LTE signal area by the second radio reception unit 29 of the RF unit 11 at radio frequencies, to thereby individually take out the 3G signal and LET signal.

The first DFE unit 31 and second DFE unit 32 are each connected to the OFDMA unit 35, SC-FDMA unit 37, and radio parameter acquisition unit for LTE 39 of the built-in DSP/L1 engine unit 33 of the LTE circuit unit 13. The second DFE unit 32 is connected to the spreading and modulation unit 50 and de-spreading and demodulation unit 52 of the 3G circuit unit 14 and the radio parameter acquisition unit for 3G 57 of the CPU 15.

The built-in DSP of the built-in DSP/L1 engine unit 33 is a digital signal processor built in the LTE circuit unit 13. The DSP installs a software program (hereinafter, merely referred to as "software" as well) therein and can perform the process suitable for a digital signal process. The L1 engine is a coprocessor that processes Layer 1 functions defined in References 1 to 3 below.
Reference 1: 3GPP TS36.211 V10.1.0
Reference 2: 3GPP TS36.212 V10.1.0
Reference 3: 3GPP TS36.213 V10.1.0

The OFDMA unit 35 performs the demodulation process for OFDMA. The OFDMA unit 35 mainly has a modulation function defined in References 1 and 3. The channel coding unit for LTE 36 performs channel coding, specifically, error correction coding. The SC-FDMA unit 37 performs the demodulation process for SC-FDMA. The SC-FDMA unit 37 mainly has a demodulation function defined in References 1 and 3. The channel decoding unit for LTE 38 decodes a received channel.

The radio parameter acquisition unit for LTE 39 measures the amplitude intensity or power intensity of the downlink data that has been obtained from at least any one of the first and second antennas 17 and 18 and then down-converted by the first downlink radio reception unit 25 and second downlink radio reception unit 30. The radio parameter acquisition unit for LTE 39 demodulates and decodes the data and analyzes the contents of, for example, the broadcast information, to thereby obtain the environmental information of neighbour cells in both of the 3G system and LTE system, such as the electric field intensity from a neighboring base station.

The built-in CPU 34 is a CPU built in the LTE circuit unit 13. The built-in CPU 34 installs a software program therein and can execute this software program. The RLC/MAC unit 40 performs radio link control (RLC) and media access control (MAC). The PDCP/GTP-U unit 41 performs a PDCP process and a GTP-U process.

The IP unit for LTE 42 performs an IP process on an LTE signal. The IP process will be described below. The IP unit for LTE 42 provides the IPsec unit for LTE 43 with the data generated by performing the IP process on an LTE signal.

The IPsec unit for LTE 43 has a security function of encrypting the data provided from the IP unit for LTE 42. The IPsec unit for LTE 43 performs the security function with a dedicated coprocessor built in the LTE circuit unit 13. This results in a lower operating frequency of the CPU core, which requires a high frequency through only the software process, thereby reducing the power consumption. The IPsec unit for LTE 43 provides the encrypted data to the PPPoE unit 60 of the CPU 15.

The AP unit for LTE 44 has an application function of controlling the LTE-side functions of the base station device 1. The PF unit for LTE 45 has a platform function of controlling the LTE-side functions of the base station device 1.

The network parameter acquisition unit 46 has a function of obtaining the network information on a layer higher than an interface between the base station device 1 and a base station controller equipment such as a mobility management entity (abbreviated as MME) and a serving gateway (abbreviated as SGW).

The data offload unit 48 has a data offload function. The data function is a function of alleviating a traffic load with the use of an Internet connection in data transmission by bypassing a normal cellular telephone network. The data offload function is all configured to be implemented by software, and thus functions can be added or reduced through update of software by remote upgrade.

The system clock supply unit 16 is a clock source capable of changing a frequency through voltage control, such as a voltage controlled xtal oscillator (abbreviated as VCXO) or a temperature compensated xtal oscillator (abbreviated as TCXO). The system clock correction unit 49 compares a time indicated by the accurate time information obtained from a GPS or NTP server and a time indicated by the time information output from the system clock supply unit 16 and, if a difference between the both times exceeds a certain difference, controls the voltage of the system clock supply unit 16 and corrects a clock frequency such that the time information becomes accurate.

The MAC-hs unit 54 of the CPU 15 has a MAC scheduling function of Layer 2 that is necessary when HSDPA is performed. HSDPA is a system obtained by increasing a downlink data transmission speed of the W-CDMA system. The MAC-e unit 55 has a MAC scheduling function of Layer 2 that is necessary when EUL is performed. EUL is also referred to as high speed uplink packet access (abbreviated as HSUPA), and is a system obtained by increasing an uplink data transmission speed of the W-CDMA system. HSDPA and EUL are 3.5th generation (abbreviated as 3.5G) communication systems. In this embodiment, the 3G system includes the 3.5 system unless otherwise specified.

The FP unit 56 performs an FP termination process. The FP unit 56 mainly has functions of framing an FP format defined in References 4 and 5 below, specifically, a function of creating an FP format and a function of releasing the FP format, as the FP termination process. While the FP unit 56 is provided in the CPU 15 such that the FP termination process is carried out in the software process by the CPU 15 in FIG. 1, the FP unit 56 may be provided in the 3G circuit unit 14 such that the FP termination process is performed by the 3G circuit unit 14.
Reference 4: 3GPP TS25.427 V10.0.1
Reference 5: 3GPP TS25.435 V10.1.0

The radio parameter acquisition unit for 3G 57 measures the amplitude intensity or power intensity of the downlink data obtained from the second antenna 18, demodulates and decodes the data, and analyzes the contents of the broadcast information, to thereby obtain the environmental information of a neighbour cell of the 3G system, such as the electric field intensity from the neighbour base station.

With reference to FIG. 1, a configuration is made such that the data from one antenna, specifically, the second antenna 18 is input to the radio parameter acquisition unit for 3G 57 to be analyzed. Alternatively, similarly to the LTE-side, a configuration may be made such that the data from the first antenna 17 is also input to the radio parameter acquisition unit for 3G 57 and the data from two antennas is analyzed. As a result, a diversity effect can be achieved, and the environmental information of the neighbour cell can be obtained more accurately.

The IP unit for 3G 58 has a function of performing the process (hereinafter, also referred to as "framing") for the IP frame data of Layer 3. The IP unit for 3G 58 provides the IP frame data to the IPsec unit for 3G 59.

The IPsec unit for 3G 59 has a security function of encrypting the IP frame data provided from the IP unit for 3G 58. The IPsec unit for 3G 59 carries out the security function with a dedicated coprocessor built in the CPU 15. This can suppress the operating frequency of the CPU core that requires high frequencies in only the software process, reducing the power consumption. The IPsec unit for 3G 59 provides the encrypted IP frame data to the PPPoE unit 60.

The PPPoE unit 60 performs the process supporting the PPPoE protocol on the data provided from the IPsec unit for LTE 43 and the data provided from the IPsec unit for 3G 59. The PPPoE unit 60 is connected to the MME and the SGW through the S1 interface being an LTE-side interface. The PPPoE unit 60 is connected to the radio network controller (abbreviated as RNC) through the Iub interface or Iuh interface being a 3G-side interface.

The AP unit for 3G 61 has an application function of controlling the 3G-side functions of the base station device 1. The PF unit for 3G 62 has a platform function of controlling the 3G-side functions of the base station device 1.

The 3G circuit unit 14 is formed as a large scale integration (abbreviated as LSI) for 3G (hereinafter, also referred to as "3G-LSI"). The 3G-LSI is implemented as an FPGA or ASIC.

The spreading and modulation unit 50 of the 3G circuit unit 14 performs the spreading and modulation process. The channel coding unit for 3G 51 performs channel coding, specifically, error correction coding. The de-spreading and demodulation unit 52 performs the de-spreading and demodulation process of performing demodulation through de-spreading. The channel coding unit for 3G 53 decodes a received channel.

The spreading and modulation unit 50 and de-spreading and demodulation unit 52 mainly have the functions defined in References 6 to 8 below. The channel coding unit for 3G 51 and the channel coding unit for 3G 53 mainly have the functions defined in Reference 9 below.
Reference 6: 3GPP TS25.211
Reference 7: 3GPP TS25.213
Reference 8: 3GPP TS25.214
Reference 9: 3GPP TS25.212

The base station device 1 shown in FIG. 1 is a shared base station device (hereinafter, also referred to as "dual base station device") that supports the 3G system, specifically, both of the W-CDMA system and LTE system.

In the base station device 1 shown in FIG. 1, a part having the functions supporting the 3G system (hereinafter, also referred to as "3G-side functional part") has a configuration including the second antenna 18, the second DUP unit 26, second SW unit 27, second radio transmission unit 28, second radio reception unit 29, and second downlink radio reception unit 30 of the RF unit 11, the second DFE unit 32 of the DFE circuit unit 12, the spreading and modulation unit 50, channel coding unit for 3G 51, de-spreading and demodulation unit 52, and channel coding unit for 3G 53 in the W-CDMA system of the 3G circuit unit 14, the MAC-hs unit 54, MAC-e unit 55, FP unit 56, radio parameter acquisition unit for 3G 57, IP unit for 3G 58, IPsec unit for 3G 59, PPPoE unit 60, AP unit for 3G 61, and PF unit for 3G 62 of the CPU 15.

The part having the functions supporting the LTE system (hereinafter, also referred to as "LTE-side functional part") has a configuration including the first antenna 17, the first DUP unit 21, first SW unit 22, first radio transmission unit 23, first radio reception unit 24, and first downlink radio reception unit 25 of the RF unit 11, the first DFE unit 31 of the DFE circuit unit 12, and the OFDMA unit 35, channel coding unit for LTE 36, SC-FDMA unit 37, channel decoding unit for LTE 38, radio parameter acquisition unit for LTE 39, RLC/MAC unit 40, PDCP/GTP-U unit 41, IP unit for LTE 42, IPsec unit for LTE 43, AP unit for LTE 44, PF unit for LTE 45, network parameter acquisition unit 46, data offload unit 48, and system clock correction unit 49 that constitute the LTE circuit unit 13.

In the base station device 1 shown in FIG. 1, as described above, the DFE circuit unit 12 arranges or separates the bands of the signals of different systems in a digital baseband area.

The radio frequency (RF) process originally requires two systems in the LTE system and one system in the 3G system, three systems in total. The base station device 1 shown in FIG. 1 performs the radio frequency process in the digital baseband area as described above, and thus requires only two systems in the process.

A reduction in the number of radio frequency (RF) processing systems results in a reduction in power consumed by the RF unit 11, for example, power consumption of an amplifier or the like. Also, the size and price of the base station device 1 can be reduced.

In FIG. 1, a line connecting the functional parts mainly indicates a data signal line. While the AP unit for LTE 44, PF unit for LTE 45, AP unit for 3G 61, and PF unit for 3G 62 should be connected to the functions to be controlled thereby, signal lines are not shown. Note that the signal line that connects the PF unit for 3G 62 and PF unit for LTE 45 is a signal line for achieving functions regarding the operation of associating the 3G-side functions such as a CS fallback and the LTE-side functions, and is thus not omitted.

In the base station device 1 shown in FIG. 1, the LTE circuit unit 13 is flexibly configured so as to implement therein a software process such as the built-in DSP and built-in CPU 34. Thus, the formation of the LTE circuit unit 13 as, for example, an LSI or ASIC results in a reduction in power consumption, miniaturization, and a lower price of the device. Similarly, the formation of the 3G circuit unit 14 as, for example, an LSI or ASIC results in reductions in power consumption, size, and price of the device.

In the base station device 1 shown in FIG. 1, one RF system for 3G system and two RF systems for LTE system, or three RF systems are required in total. Here, a digital front end (DFE) function is implemented in the DFE circuit unit 12 implemented in the FPGA or ASIC, which requires only two systems. This results in reductions in price, power consumption, and size of the device.

The DFE is the digital separating/coupling technology of the 3G/LTE band. The bands of the 3G system and LTE system are distributed and coupled adaptively for transmission/reception signals, so that one system of the two RF systems can be shared between the 3G system and the LTE system.

The base station device 1 shown in FIG. 1 can be achieved by implementing the OFDMA, SC-FDMA, channel coding, channel decoding, radio parameter acquisition function, and the like in the built-in DSP in the LTE circuit unit 13 that is suitable for calculations, and in an L1 engine (coprocessor has Layer 1 functions, such as an FFT, DFT, LLR, cyclic redundancy checksum (abbreviated as CRC), and turbo/viterbi decoder) that is also implemented in the LTE circuit unit 13. The radio parameter acquisition function is a function of performing a reception process in an LTE circuit while the 3G-side function service and LTE-side function service are both stopped.

A system clock correction function is implemented in the built-in CPU 34 built in the LTE circuit unit 13, whereby fluctuations of the clock pulse generated by the base station in the NTP server correction scheme can be reduced, leading to a lower price of a reference oscillator and high reliability of frequency accuracy. As the system clock supply function, a TCXO or VCXO being an inexpensive reference oscillator can be adopted. This results in a reduction in device cost.

A home gateway connection function is provided to the CPU 15 or the built-in CPU 34 of the LTE circuit unit 13, so that electrical equipment and the base station device 1 can be associated with each other.

In the base station device 1 shown in FIG. 1, the main function of the LTE-side functions and the main function of the 3G-side functions are independent of each other in a hardware level. Specifically, the LTE circuit unit 13 that is in charge of the main function of the LTE-side functions and the circuit unit for 3G 14 that is in charge of the main function of the 3G-side functions are provided independently of each other. Consequently, the functions of one of the LTE and 3G communication systems can be stopped easily.

In the base station device 1 shown in FIG. 1, the FP unit 56, IP unit for 3G 58, IPsec unit for 3G 59, and PPPoE unit 60 that serve as a path of the 3G-side user data is achieved through the software process by the CPU 15, and thus, a software processing load may become excessively large in the CPU 15. The base station device of the present invention thus employs the configurations of the embodiments described below.

### First Embodiment

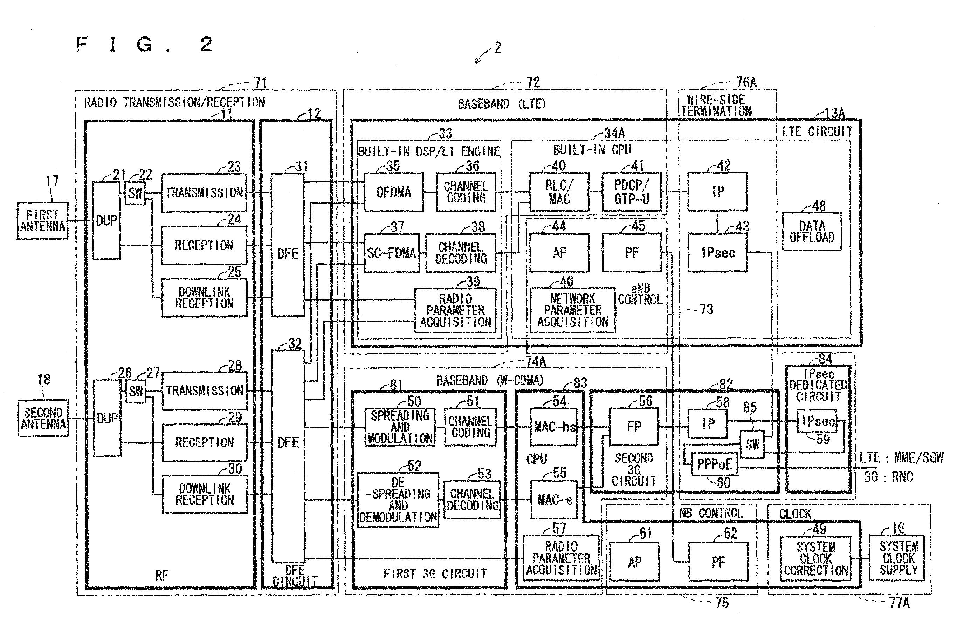

FIG. 2 is a block diagram showing a configuration of a base station device 2 according to a first embodiment of the present invention. The configuration of the base station device 2 in this embodiment is similar to the configuration of the base station device 1 in the underlying technology shown in FIG. 1 described above, and thus, corresponding parts are denoted by the same reference symbols and common description is omitted.

The base station device 2 of this embodiment has a configuration including an RF unit 11, a DFE circuit unit 12, an LTE circuit unit 13A, a system clock supply unit 16, a first antenna 17, a second antenna 18, a first 3G circuit unit 81, a second 3G circuit unit 82, a CPU 83, and an IPsec dedicated circuit unit 84.

The RF unit 11 and DFE circuit unit 12 have the configurations same as those of the RF unit 11 and DFE circuit unit 12 of the base station device 1 in the underlying technology. The first 3G circuit unit 81 has the configuration same as that of the 3G circuit unit 14 of the base station device 1 in the underlying technology. The LTE circuit unit 13A has a configuration obtained by eliminating the system clock correction unit 49 from the LTE circuit unit 13 of the base station device 1 in the underlying technology.

While the FP unit 56, IP unit for 3G 58, IPsec unit for 3G 59, and PPPoE unit 60 are implemented by the CPU 15 as shown in FIG. 1 in the underlying technology described above, they are implemented by the second 3G circuit unit 82 and IPsec dedicated circuit unit 84 being hardware circuits in this embodiment. In other words, in this embodiment, the FP unit 56, IP unit for 3G 58, IPsec unit 59, and PPPoE unit 60 are formed as circuits separate from the CPU 83.

The second 3G circuit unit 82 includes the FP unit 56, IP unit for 3G 58, PPPoE unit 60, and a change-over switch (abbreviated as SW) unit 85. The first 3G circuit unit 81 and second 3G circuit unit 82 may be formed as one circuit. The IPsec dedicated circuit unit 84 includes the IPsec unit for 3G 59. The change-over SW unit 85 changes over the connection destination of the PPPoE unit 60 to the IPsec unit for 3G 59 of the IPsec dedicated circuit unit 84 or the IPsec unit for LTE 43 of the built-in CPU 34A of the LTE circuit unit 13A. The second 3G circuit unit 82 and IPsec dedicated circuit unit 84 are implemented by a circuit such as an ASIC, for example, FPGA or LSI.

In this embodiment, the CPU 83 includes a MAC-hs unit 54, a MAC-e unit 55, a radio parameter acquisition unit for 3G 57, an AP unit for 3G 61, a PF unit for 3G 62, and a system clock correction unit 49.

The RF unit 11 and DFE circuit unit 12 constitute a radio transmission/reception unit 71. A built-in DSP/L1 engine unit 33 of the LTE circuit unit 13A and an RLC/MAC unit 40 and a PDCP/GTP-U unit 41 of the built-in CPU 34A constitute a baseband unit for LTE 72. The baseband unit for LTE 72 performs the IFFT and FFT of the LTE system, data process of channel coding and channel decoding, multiple input multiple output (abbreviated as MIMO) process, and scheduling process defined in, for example, References 1 to 3 mentioned above.

An AP unit for LTE 44, a PF unit for LTE 45, and a network parameter acquisition unit 46 of the built-in CPU 34A constitute an eNB control unit 73. The first 3G circuit unit 81, the MAC-hs unit 54, MAC-e unit 55, and radio parameter acquisition unit for 3G 57 of the CPU 83, and the FP unit 56 of the second 3G circuit unit 82 constitute a baseband unit for 3G 74A. The baseband unit for 3G 74A performs a baseband signal process of the W-CDMA system defined in, for example, References 6 to 9.

The AP unit for 3G 61 and PF unit for 3G 62 of the CPU 83 constitute an NB control unit 75. An IP unit for LTE 42 and IPsec unit for LTE 43 of the LTE circuit unit 13A, the IP unit for 3G 58, PPPoE unit 60, and change-over SW unit 85 of the second 3G circuit unit 82, and the IPsec unit for 3G 59 of the IPsec dedicated circuit unit 84 constitute a wire-side termination unit 76A. The system clock correction unit 49 of the CPU 83 and the system clock supply unit 16 connected to the system clock correction unit 49 constitute a clock unit 77A.

In this embodiment, the configuration of the LTE-side functional part is identical to the configuration in the underlying technology shown in FIG. 1 except for that the system clock correction unit 49 is moved from the LTE circuit unit 13 in the underlying technology described above to the CPU 83.

The configuration of the 3G-side functional part differs from the configuration of the base station device 1 shown in FIG. 1 described above. Specifically, the 3G-side functional part has a configuration including the second antenna 18, a second DUP unit 26, a second SW unit 27, a second radio transmission unit 28, a second radio reception unit 29, and a second downlink radio reception unit 30 of the RF unit 11, a second DFE unit 32 of the DFE circuit unit 12, a spreading and modulation unit 50, a channel coding unit for 3G 51, a de-spreading and demodulation unit 52, and a channel coding unit for 3G 53 in the W-CDMA system of the first 3G circuit unit 81, an FP unit 56, an IP unit for 3G 58, an IPsec unit for 3G 59, PPPoE unit 60, and change-over SW unit 85 of the second 3G circuit unit 82, the MAC-hs unit 54, MAC-e unit 55, radio parameter acquisition unit for 3G 57, AP unit for 3G 61, PF unit for 3G 62, and system clock correction unit 49 of the CPU 83.

In the base station device 2 of this embodiment, the IPsec dedicated circuit unit 84 is provided as an IPsec unit for 3G, and the IPsec function in the 3G system is achieved by the IPsec dedicated circuit unit 84. limited to the above, in the other embodiments of the present invention, the IPsec function in the 3G system may be achieved using the IPsec unit for LTE 43 without providing the IPsec dedicated circuit unit 84 and change-over SW unit 85. In this case, the IP unit 58 of the second 3G circuit unit 82 is connected to the IPsec unit for LTE 43 of the built-in CPU 34A of the LTE circuit unit 13A. The IPsec unit for LTE 43 is directly connected to the PPPoE unit 60 of the second 3G circuit unit 82.

As described above, in this embodiment, the FP unit 56, IP unit for 3G 58, IPsec unit 59, and PPPoE unit 60 are implemented as hardware circuits. As a result, the MAC-hs unit 54 and MAC-e unit 55 can be configured so as not to transmit user data but to obtain parameters and perform only the scheduling functions such as transmission speed control.

Accordingly, as shown in FIG. 2, the channel for the 3G-side user data can be formed of only hardware circuits, and thus, a software processing load can be reduced. This embodiment can achieve effects similar to those of the underlying technology described above.

In the base station device 2 of this embodiment, as described above, the channel for the 3G-side user data is formed of hardware circuits, and thus, various functions of the 3G system are divided into the software process in the CPU 83 and the hardware process in the second 3G circuit unit 82.

In this case, if a configuration is made such that the access to the external storage device that temporarily stores large quantities of data is made by the hardware process side, that is, the second 3G circuit unit 82, an arbitrating function for preventing an access conflict needs to be installed in the second 3G circuit unit 82 being a hardware circuit.

Mounting the arbitrating function to the hardware circuit in this manner increases a circuit size of the hardware circuit, which results in an increase in power consumption. This causes a problem that the base station device 2 is difficult to be miniaturized.

In this embodiment, accordingly, an external RAM is connected to the CPU 83 as an external storage device such that various process functions of the 3G system are tasked to the CPU 83 and second 3G circuit unit 82. This embodiment adopts the W-CDMA system as the 3G system.

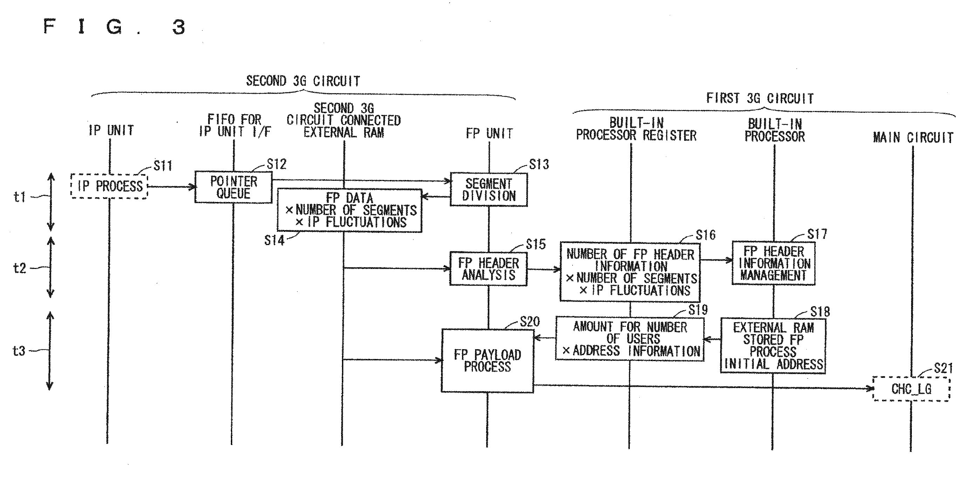

First, description will be given of a case in which an external RAM is connected to the second 3G circuit unit 82. FIG. 3 is a sequence diagram showing an operating procedure of a downlink legacy (abbreviated as LG) process in the FP process of the W-CDMA system in a case where an external RAM is connected to the second 3G circuit unit 82. Hereinafter, the external RAM connected to the second 3G circuit unit 82 may be referred to as a "second 3G circuit connected external RAM".

FIG. 3 shows the operating procedure of the FP data process except for the HSDPA and EUL described in References 4 and 5 mentioned above, as the downlink LG process. FIG. 3 omits the description of the control frame process of the FP data process. In FIG. 3, the direction of an unidirectional arrow indicates the direction in which data is transmitted.

In the processes shown in FIG. 3, the processes from the IP process in Step S 11 to storing of a pointer queue in Step S12, division of a segment in Step S13, and to storing of the FP data in the second 3G circuit connected external RAM in Step S14 are performed within a first processing time t1 determined in advance. The first processing time t1 is preferably as short as possible, and the processes of Steps S11 to S14 are performed immediately, that is, as promptly as possible. The first processing time t1 is, for example, 1 ms. The time of IP fluctuations is, for example, 390 ms.

In the processes shown in FIG. 3, the processes from the FP header analysis in Step S15 to storing of FP header information in the built-in processor register in Step S16 and to the FP header information management process in Step S17 are performed within a second processing time t2 determined in advance. The second processing time t2 is, for example, 10 ms.

In the processes shown in FIG. 3, the processes from the initial address extraction process of the external RAM storing FP process in Step S18 to storing of the address information for the number of users in the built-in processor register in Step S19, the FP payload process in Step S20, and to the process of setting to the CHC_LG processing unit in Step S21 are performed within a third processing time t3 determined in advance. The third processing time t3 is, for example, 10 ms. The process of setting to the CHC_LG processing unit in Step S21 does not include the CHC_LG process per se.

Hereinafter, the second 3G circuit unit 82 and first 3G circuit unit 81 shown in FIG. 2 described above may be referred to as a "second 3G circuit" and a "first 3G circuit", respectively. The configuration of the second 3G circuit unit 82 shown in FIG. 2, that is, the FP unit 56, IP unit for 3G 58, PPPoE unit 60, and change-over SW unit 85 may be collectively referred to as a "main circuit of the second 3G circuit unit 82".

The configuration of the first 3G circuit unit 81 shown in FIG. 2, that is, the spreading and modulation unit 50, channel coding unit for 3G 51, de-spreading and demodulation unit 52, and channel coding unit for 3G 53 may be referred to as a "main circuit of the first 3G circuit unit 81". The main circuit of the first 3G circuit unit 81 is a circuit that achieves the functions of channel coding, channel decoding, modulation, and demodulation in the first 3G circuit unit 81.

The "FP unit" shown in FIG. 3 refers to the FP unit 56 of the second 3G circuit unit 82 shown in FIG. 2. The FP unit 56 of the second 3G circuit unit 82 is a functional part for the FP process inside the second 3G circuit unit 82.

In the FP unit 56 of the second 3G circuit unit 82, the FP header analysis process of Step S15 and the FP payload process of Step S20 are each activated by being triggered by pulse signals at 10 ms intervals existing individually for each user or by pulse signals synchronized with at least any one of the first CH and second CH among SCCPCHs existing for an amount of two channels (abbreviated as CHs).

The "IP unit" shown in FIG. 3 refers to the IP unit for 3G 58 of the second 3G circuit unit 82 shown in FIG. 2. The IP unit for 3G 58 of the second 3G circuit unit 82 is a functional part for the IP process inside the second 3G circuit unit 82 and performs frame analysis of the IP header.

The "FIFO for IP unit I/F" shown in FIG. 3 refers to a first-in first-out (FIFO) circuit that relays the data passing from the IP unit to the FP unit inside the second 3G circuit unit 82 shown in FIG. 2. Although not shown in FIG. 2, the FIFO for IP unit I/F is provided inside the second 3G circuit unit 82.

The "second 3G circuit connected external RAM" shown in FIG. 3 refers to an external RAM connected to the second 3G circuit unit 82 shown in FIG. 2. For easy understanding, FIG. 3 shows that the second 3G circuit connected external RAM is included in the second 3G circuit unit 82 but, in actuality, the second 3G circuit connected external RAM is provided outside the second 3G circuit unit 82. The second 3G circuit connected external RAM is configured as, for example, a synchronous dynamic random access memory (SDRAM) or double data rate-random access memory (DDR-RAM).

The "built-in processor" shown in FIG. 3 refers to a processor provided inside the first 3G circuit unit 81. The "built-in processor register" refers to a register that sets parameters and obtains parameters for accessing a built-in processor. Although not shown in FIG. 2, the built-in processor and built-in processor register are provided inside the first 3G circuit unit 81.

The downlink LG process shown in FIG. 3 is performed as follows. In Step S11, the IP unit for 3G 58 of the second 3G circuit unit 82 performs the IP process. The IP process is the process of analyzing the information of the IP header or the like, removing the header, retrieving the contents, specifically, the FP data, and providing the retrieved FP data to the FP unit 56 via the FIFO for IP unit I/F.

Next, in Step S12, the FIFO for IP unit I/F performs the process of storing a pointer queue. The process of storing a pointer queue is the process of stacking the data processed in the IP unit 58 as a queue on the FIFO. The FIFO for IP unit I/F is made to be connected to the IP unit for 3G 58 and FP unit 56 at a full rate of, for example, 100 Mbps.

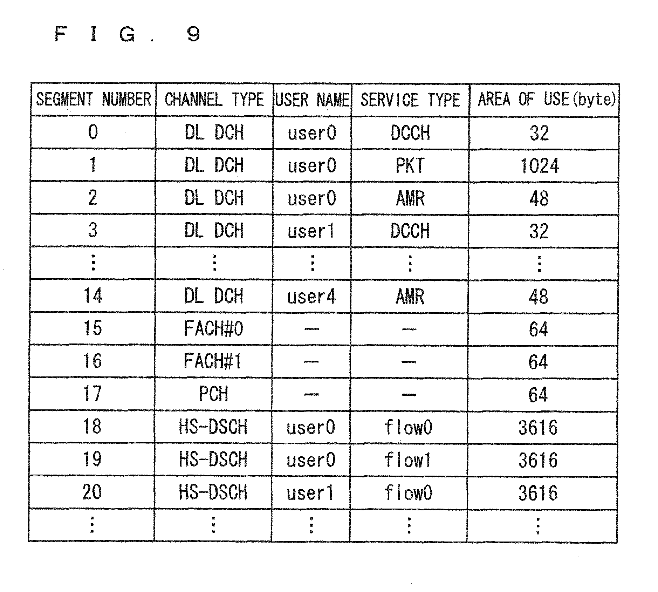

Next, in Step S13, the FP unit 56 of the second 3G circuit unit 82 performs a segment division process. The segment division process is the process of dividing the FP data into the types of HSDPA, legacy, and control frame. Specifically, the segment division process is the process of dividing the FP data per channel and per user as shown in FIG. 9. FIG. 9 shows the "segment number", "channel type", "user name", "service type", and "area of use (byte)".

Next, in Step S14, the FP unit 56 of the second 3G circuit unit 82 stores, in the second 3G circuit connected external RAM, the FP data for an amount obtained by multiplying the FP data by the number of segments and an amount of IP fluctuations.

Next, in Step S15, the FP unit 56 of the second 3G circuit unit 82 performs the FP header analysis process. The FP header analysis process refers to the process of analyzing whether or not the CRC of the header portion of the FP (hereinafter, also referred to as "FP header CRC") described in References 4 and 5 mentioned above is correct or how many transport format indicators (abbreviated as TFIs) are provided.

Next, in Step S16, the FP unit 56 of the second 3G circuit unit 82 stores, in the built-in processor register of the first 3G circuit unit 81, the FP header analysis process results for an amount obtained by multiplying the number of FP header information by the number of segments and an amount of IP fluctuations.

Next, in Step S17, the built-in processor of the first 3G circuit unit 81 performs the FP header information management process. The FP header information management process is the process of judging, for example, whether or not to discard FP data based on the FP header analysis process results stored in the built-in processor register, such as the information on whether or not the FP header CRC is correct.

Following the FP header information management process of Step S17, in Step S18, the built-in processor of the first 3G circuit unit 81 performs an initial address notification process. The initial address notification process is the process of obtaining the initial address information when the FP payload processing unit of the FP unit 56 of the second 3G circuit unit 82 obtains the FP data to be processed next from the second 3G circuit connected external RAM, to thereby notify the FP unit 56 of the second 3G circuit unit 82 of the obtained initial address information via the built-in processor register.

Next, in Step S19, the built-in processor of the first 3G circuit unit 81 stores the initial address information for the number of users in the built-in processor register of the first 3G circuit unit 81.

Next, in Step S20, the FP unit 56 of the second 3G circuit unit 82 performs an FP payload process. The FP payload process is the process of analyzing, for example, whether or not the CRC of the payload portion of the FP data is correct, to thereby provide the data except for the CRC to the CHC_LG unit of the first 3G circuit unit 81.

The FP unit 56 obtains the initial address information stored in Step S19 from the built-in processor register and, based on the obtained initial address information, obtains FP data from the second 3G circuit unit connected external RAM, to thereby perform the FP payload process on the obtained FP data.

Next, in Step S21, the main circuit of the first 3G circuit unit 81 sets, in the CHC_LG processing unit, the data except for the CRC provided from the FP unit 56 of the second 3G circuit unit 82 as a target for the CHC_LG process.

Though not included in the downlink LG process shown in FIG. 3, when the data except for the CRC has been set as described above, the CHC_LG processing unit of the first 3G circuit unit 81 performs the CHC_LG process on the set data except for the CRC. The CHC_LG process is a channel coding process for transport channels (see Reference 9).

In a case where the external RAM is connected to the second 3G circuit unit 82, the functions are tasked such that the second 3G circuit unit 82 performs the FP header analysis of Step S 15 which involves CRC calculations and the FP payload process of Step S20 and the second 3G circuit connected external RAM stores the FP data including the amount of IP fluctuations. This stabilizes the data process, resulting in a small amount of processing load on the CPU 83.

However, the access control unit of the external RAM, specifically, the arbiter that controls writing and reading needs to be mounted in the second 3G circuit unit 82. This increases the size of the circuit constituting the second 3G circuit unit 82, which cannot reduce the size and power consumption of the base station device 2.

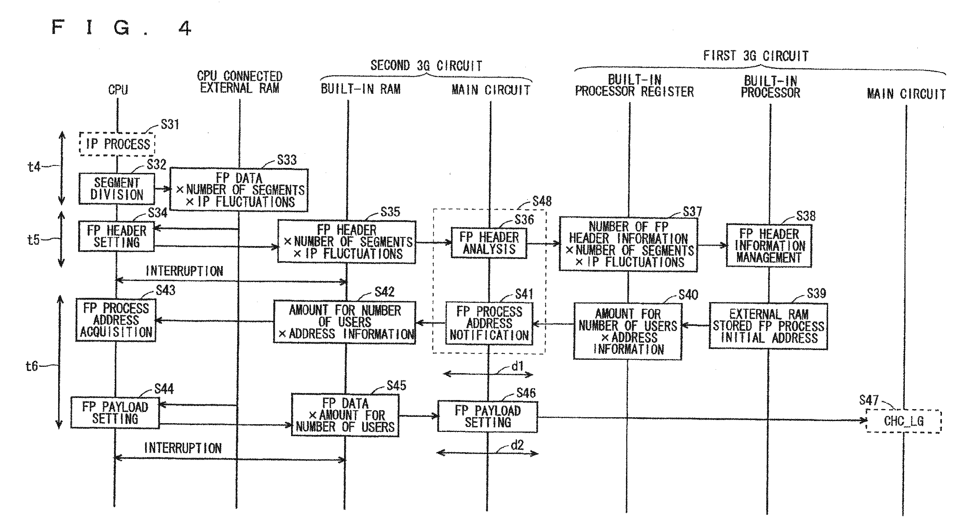

FIG. 4 is a sequence diagram showing an operating procedure of a downlink legacy process in the FP process of the W-CDMA system in a case where the external RAM is connected to the CPU 83. Hereinafter, the external RAM connected to the CPU 83 may be referred to as a "CPU connected external RAM".

FIG. 4 shows, as the downlink LG process, the operating procedure of the FP data process except for HSDPA and EUL described in References 4 and 5 mentioned above, similarly to FIG. 3 above. FIG. 4 does not describe the control frame process of the FP data process, similarly to FIG. 3. For the processes shown in FIG. 4, the description common to the same processes shown in FIG. 3 is not given.

In the processes shown in FIG. 4, the processes from the IP process in Step S31 to the division of segments in Step S32 and to storing of FP data in the CPU connected external RAM in Step S33 are performed within a fourth processing time t4 determined in advance. The fourth processing time t4 is preferably as short as possible, and the processes of Steps S31 to S33 are performed immediately, that is, as promptly as possible. The fourth processing time t4 is, for example, 1 ms. The time of IP fluctuations is, for example, 390 ms.

In the processes shown in FIG. 4, the processes from the FP header setting in Step S34 to storing of FP header information in the built-in RAM in Step S35, the FP header analysis in Step S36, storing of FP header information in the built-in processor register in Step S37, and to the FP header information management process in Step S38 are performed within a fifth processing time t5 determined in advance. The fifth processing time t5 is, for example, 10 ms.

In the processes shown in FIG. 4, the processes from the process of extracting an initial address of the external RAM stored FP process in Step S39 to storing of address information for the number of users in the built-in processor register in Step S40, FP process address notification in Step S41, storing of address information for the number of users in the built-in RAM in Step S42, FP address acquisition in Step S43, FP payload setting in Step S44, storing of FP data in the built-in RAM in Step S45, the FP payload process in Step S46, and to the process of setting to the CHC_LG processing unit in Step S47 are performed within a sixth processing time t6 determined in advance. The sixth processing time t6 is, for example, 10 ms.

The main circuit of the second 3G circuit unit 82, specifically, the FP unit 56 activates the process of Step S48 and the FP payload process of Step S46 by being triggered by pulse signals at 10-ms intervals d1 and d2 provided individually for each user, respectively, or a pulse signal synchronized with at least any one of the first CH and second CH among the SCCPCHs existing for an amount of two CHs. The process of Step S48 includes the FP header analysis process of Step S36 and the FP process address notification process of Step S41.

The second 3G circuit unit 82 provides the CPU 83 with interrupt signals at, for example, 2-ms intervals. The CPU 83 accesses the second 3G circuit unit 82 by being triggered by the interrupt signal provided from the second 3G circuit unit 82.

While the base station device 2 is configured such that the second 3G circuit unit 82 provides the CPU 83 with interrupt signals in this embodiment, it may be configured such that the first 3G circuit unit 81 provides the CPU 83 with interrupt signals. In this case, the CPU 83 accesses the second 3G circuit unit 82 by being triggered by the interrupt signal provided from the first 3 G circuit unit 81.

The "CPU" shown in FIG. 4 means the CPU 83 shown in FIG. 2. The "CPU connected external RAM" shown in FIG. 4 is an external RAM connected to the CPU 83 shown in FIG. 2. The CPU connected external RAM is configured as, for example, an SDRAM or DDR-RAM. The "built-in RAM" shown in FIG. 4 is a RAM built in the second 3G circuit unit 82.

The downlink LG process shown in FIG. 4 is performed as follows. In Step S31, the CPU 83 performs the IP process. Here, the CPU 83 performs, as the IP process, the process of analyzing information such as an IP header, removing the header, and then retrieving the contents thereof, specifically, FP data.

Next, in Step S32, the CPU 83 performs the segment division process on the FP data retrieved in Step S31. Details of the segment division process are similar to those of the process of Step S13 in FIG. 3. Next, in Step S33, the CPU 83 stores, in the CPU connected external RAM, the FP data for an amount obtained by multiplying the FP data by the number of segments and an amount of IP fluctuations.

Next, in Step S34, the CPU 83 performs the FP header setting process. The FP header setting process is the process of retrieving the FP data stored in Step S33 from the CPU connected external RAM and setting the FP header of the retrieved FP data in the second 3G circuit unit 82, specifically, the built-in RAM of the second 3G circuit unit 82 as a process target.

Next, in Step S35, the second 3G circuit unit 82 provides the main circuit of the second 3G circuit unit 82, specifically, the FP unit 56 with the FP headers for an amount obtained by multiplying the FP header by the number of segments and an amount of IP fluctuations, which has been set in the built-in RAM as a process target in Step S34.

Next, in Step S36, the main circuit of the second 3G circuit unit 82, specifically, the FP unit 56 performs the FP header analysis process. The FP header analysis process is similar to the process of Step S15 in FIG. 3.

Next, in Step S37, the main circuit of the second 3G circuit unit 82 stores, in the built-in processor register of the first 3G circuit unit 81, the FP header analysis process results for an amount obtained by multiplying the number of FP header information by the number of segments and an amount of IP fluctuations.

Next, in Step S38, the built-in processor of the first 3G circuit unit 81 performs the FP header information management process. The FP header information management process is similar to the process of Step S17 in FIG. 3.

Following the FP header information management process of Step S38, the built-in processor of the first 3G circuit unit 81 performs the initial address notification process in Step S39. The initial address notification process is similar to the process of Step S18 in FIG. 3.

Next, in Step S40, the built-in processor of the first 3G circuit unit 81 stores the initial address information for the number of users in the built-in processor register of the first 3G circuit unit 81. This initial address information may be referred to as an "FP process address" below.

Next, in Step S41, the main circuit of the second 3G circuit unit 82, specifically, the FP unit 56 obtains the FP process addresses for the number of users stored in Step S40 from the built-in processor register of the first 3G circuit unit 81.

Next, in Step S42, the main circuit of the second 3G circuit unit 82 stores the FP process addresses for the number of users obtained in Step S41 in the built-in RAM of the second 3G circuit unit 82.

Next, in Step S43, the CPU 83 obtains the FP process addresses stored in Step S43 from the built-in RAM of the second 3G circuit unit 82. In this manner, the main circuit of the second 3G circuit unit 82 notifies the CPU 83 of the FP process addresses through the built-in RAM of the second 3G circuit unit 82.

Following the process of Step S43, in Step S44, the CPU 83 performs the FP payload setting process. The FP payload setting process is the process of retrieving an FP payload from a predetermined stored address of the CPU connected external RAM based on the FP header analysis results and sets it in the second 3G circuit unit 82 as a target for the FP payload process. Specifically, the CPU 83 stores, in the built-in RAM of the second 3G circuit unit 82, an FP payload for an amount obtained by multiplying the FP data retrieved from the CPU connected external RAM by an amount for the number of users.

The CPU 83 checks a flag per interval at which an interrupt signal is provided, for example, for each 2 ms and, if the flag is active, performs the operation from the FP process address acquisition of Step S43 to the FP payload setting process of Step S44.

In Step S45, the main circuit of the second 3G circuit unit 82, specifically, the FP unit 56 obtains, from the built-in RAM of the second 3G circuit unit 82, an FP payload for an amount obtained by multiplying the FP data stored in Step S44 by an amount for the number of users.

Next, in Step S46, the main circuit of the second 3G circuit unit 82, specifically, the FP unit 56 performs an FP payload process on the FP payload obtained in Step S45. The FP payload process is similar to the process of Step S20 of FIG. 3.

Next, in Step S47, the main circuit of the first 3G circuit unit 81 sets, in the CHC_LG processing unit, the data except for the CRC that has been provided from the main circuit of the second 3G circuit unit 82, specifically, the FP unit 56 as a target for the CHC_LG process.

The sequence shown in FIG. 4 described above differs from the sequence shown in FIG. 3 described above in that a large-capacity external RAM that is necessary for temporarily storing the data from the base station controller equipment to absorb timing, in which IP fluctuations are taken into account, is not connected to the second 3G circuit unit 82 but is connected to the CPU 83. This enables the second 3G circuit unit 82 to receive only the data for an amount required for processing FP data from the CPU 83 and then process the data.

Specifically, the CPU 83 passes only the FP data that is desirably processed at certain transmission time intervals (abbreviated as TTIs, see Reference 9) to the second 3G circuit unit 82, and the second 3G circuit unit 82 performs the FP payload process on only the data for an amount passed from the CPU 83. Thus, the second 3G circuit unit 82 needs not to recognize how much data is stored in the external RAM.

As to the FP header analysis process of Step S36, the FP header has a relatively small data amount and has a maximum of about five bytes per FP data. Accordingly, if a configuration is made such that data is stored in the built-in RAM without connecting an external RAM to the second 3G circuit unit 82, there is no difference in an increase in circuit size of the second 3G circuit unit 82. Thus, in Step S34, the CPU 83 sets the FP header including an amount of IP fluctuations in the second 3G circuit unit 82.

As a result, the built-in processor of the first 3G circuit unit 81 can manage the FP header information, whereby the FP data to be desirably processed next, specifically, the PF payload information can be passed to the CPU 83 in advance. Thus, the processing speed of the operation process shown in FIG. 4 becomes slower than the process speed of the operation process shown in FIG. 3 by only a period of time required for accessing the CPU 83, specifically, by about 2 ms.

The CPU 83 is affected by only an increase in processing load for that amount, and an amount of the increase is small. This embodiment can prevent an increase in circuit size of the second 3G circuit unit 82 without an excessive increase in processing load of the CPU 83.

In this embodiment, as described above, access to an external RAM being an external storage is made by the CPU 83. The CPU 83 functions as a data exchange unit by a software program. In other words, the data exchange unit is implemented by a software program.

The second 3G circuit unit 82 being a communication processing unit needs not to access an external RAM because access to the external RAM being an external storage is made by the CPU 83 being a data exchange unit implemented by a software program.

Through the above, the size of the circuit configured as the second 3G circuit unit 82 can be lowered, which lowers the power consumption. As a result, the base station device 2 capable of radio communication with a communication terminal device can be achieved with as little power consumption as possible. Also, the base station device 2 can be miniaturized easily.

Examples of the communication processes performed by the second 3G circuit unit 82 include the FP process, FP payload process, and FP framing process described below. In these processes, access to an external RAM is made by the CPU 83, which particularly displays the above-mentioned effects that the size of the circuit configured as the second 3G circuit unit 82 can be reduced and thus the power consumption can be lowered.

The base station device 2 of this embodiment is capable of radio communication with a communication terminal device in both of the LTE system and 3G system. In the base station device 2 as described above, access to the external RAM that stores the data handled by the LTE-side functional part and 3G-side functional part being a communication processing unit is made by the CPU 83 that functions as a data exchange unit by a software program, so that the above-mentioned effects can be particularly displayed. This can achieve the base station device 2 supporting a plurality of communication systems with as little power consumption as possible.

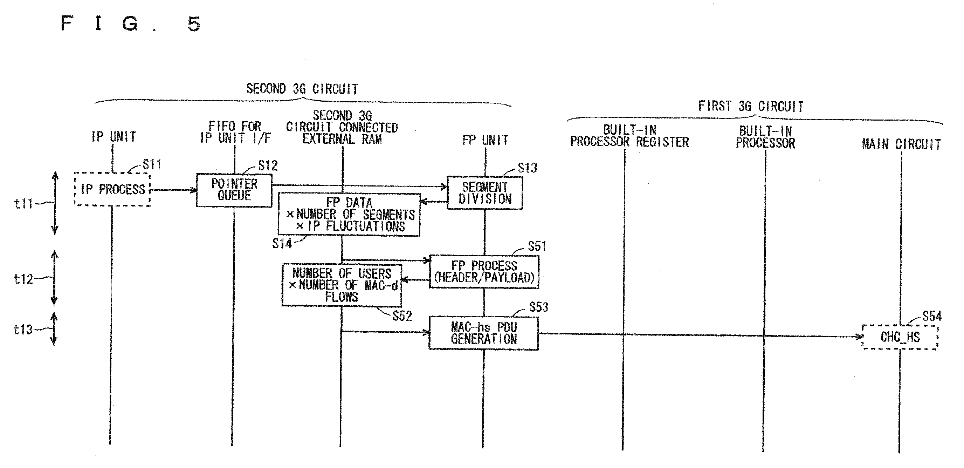

FIG. 5 is a sequence diagram showing an operating procedure of the HSDPA in the FP processes of the W-CDMA system in a case where an external RAM is connected to the second 3G circuit unit 82. FIG. 5 shows the operating procedure of the FP data process of the HSDPA described in References 4 and 5 mentioned above. FIG. 5 does not show the control frame process of the FP data process as in FIGS. 3 and 4 described above. For the processes shown in FIG. 5, the description common to the same processes shown in FIG. 3 is not given.

In the processes shown in FIG. 5, the processes from the IP process in Step S11 to storing of a pointer queue in Step S12, division of segments in Step S13, and to storing of FP data in the second 3G circuit connected external RAM in Step S14 are performed within an eleventh processing time t11 determined in advance. The eleventh processing time t11 is, for example, 2 ms. The time of IP fluctuations is, for example, 390 ms.

In the processes shown in FIG. 5, the processes from the FP process in Step S51 to storing of, in the second 3G circuit connected external RAM, the FP process results for an amount obtained by multiplying the number of users by an amount for the number of MAC-d flows in Step S52 are performed within a twelfth processing time t12 determined in advance. The twelfth processing time t12 is 2 ms × an amount for the number of users, for example, 2 ms × 4.

In the processes shown in FIG. 5, the processes from the MAC-hs PDU generation process in Step S53 to setting in the CHC_HS unit in Step S54 (see Reference 9) are performed within a thirteenth processing time t13 determined in advance. The thirteenth processing time t13 is, for example, 2 ms.

The HSDPA process shown in FIG. 5 is performed as follows. The processes of Steps S11 to S14 are performed as in the case shown in FIG. 3 described above, and then, in Step S51, the FP unit 56 of the second 3G circuit unit 82 performs the FP process, specifically, the FP header analysis process and FP payload process. The FP header analysis process is similar to the FP header analysis process of Step S15 shown in FIG. 3 described above. The FP payload process is similar to the FP payload process of Step S20 shown in FIG. 3 described above.

Next, in Step S52, the FP unit 56 stores, in the second 3G circuit connected external RAM, the FP process results for an amount obtained by multiplying the number of users by an amount for the number of MAC-d flows, specifically, the FP header analysis process results and FP payload process results. Here, the MAC-d flow is a unit for controlling user data transmission from the RNC to the base station device 2 using the FP of a high-speed downlink shared channel (abbreviated as HS-DSCH) being a transport channel.

Following the FP process of Step S51, the FP unit 56 performs the MAC-hs PDU generation process in Step S53. The MAC-hs PDU generation process is the process in which the FP unit 56 reassembles the MAC-d PDU (for example, see Reference 5) provided from the IP unit 58 as a MAC-hs PDU (for example, see Reference 9) in accordance with an instruction for a downlink transmission speed from the MAC-hs unit 54 of FIG. 2 which corresponds to a scheduler.

Here, the MAC-hs PDU is a PDU in a part related to the HSDPA system among the MAC-PDUs being protocol data units (abbreviated as PDUs) in the MAC layer. The MAC-d PDU is a PDU for a dedicated channel (abbreviated as DCH) for data transmission among the MAC-PDUs. The MAC-hs PDU has a configuration including a plurality of MAC-d PDUs.

Next, in Step S54, the FP unit 56 of the second 3G circuit unit 82 sets, in the main circuit of the first 3G circuit unit 81, specifically, the CHC_HS processing unit, the MAC-hs PDU generated in Step S53 as a target for the CHC_HS process.

Though not included in the HSDPA process shown in FIG. 5, when the MAC-hs PDU has been set as described above, the CHC_HS processing unit of the first 3G circuit unit 81 performs the CHC_HS process on the set MAC-hs PDU. The CHC_HS process is the process of performing channel coding of HSDPA data (for example, see Reference 9).

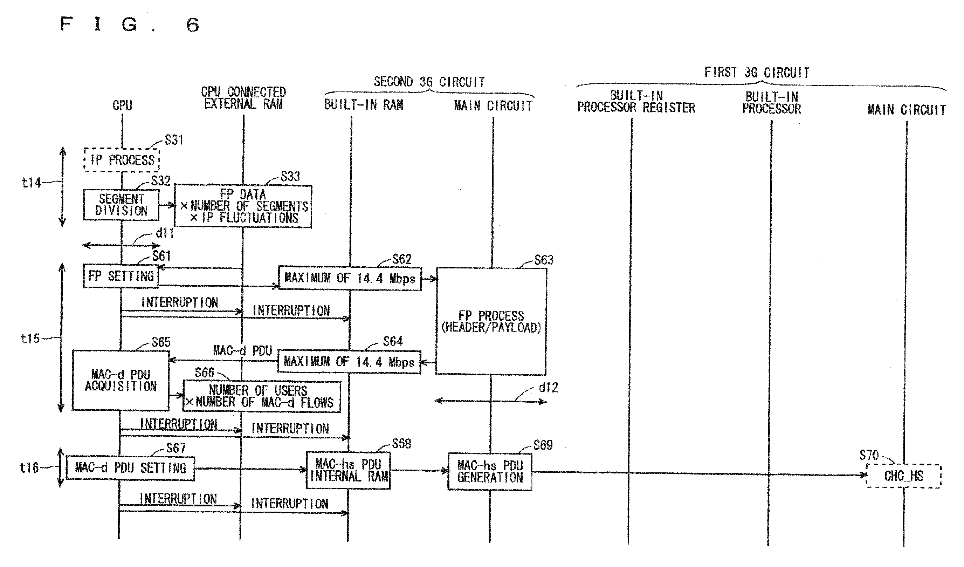

FIG. 6 is a sequence diagram showing an operating procedure of the HSDPA process in the FP process of the W-CDMA system in a case where an external RAM is connected to the CPU 83. As in FIG. 5 described above, FIG. 6 shows the operating procedure of the HSDPA FP data process described in References 4 and 5 mentioned above. FIG. 6 omits the control frame process, as in FIG. 4 described above. For the processes shown in FIG. 6, the description common to the same processes shown in FIGS. 4 and 5 described above is not given.

In the processes shown in FIG. 6, the processes from the IP process in Step S31 to the division of segments in Step S32 and to storing of FP data in the CPU connected external RAM in Step S33 are performed within a fourteenth processing time t14 determined in advance. The fourteenth processing time t14 is for example, 2 ms. The time of IP fluctuations is, for example, 390 ms.

In the processes shown in FIG. 6, the processes from FP setting in Step S61 to the process in Step S62, FP process in Step S63, MAC-d PDU acquisition in Steps S64 and Step S65, and storing of a PDU in a CPU connected external RAM in Step S66 are performed within a fifteenth processing time t15 determined in advance. The fifteenth processing time t15 is, for example, 2 ms × 4.

In the processes shown in FIG. 6, the processes from MAC-d PDU setting in Step S67 to storing of a MAC-hs PDU in an internal RAM in Step S68, MAC-hs PDU generation process in Step S69, and to setting in the CHC_HS unit (see Reference 9) in Step S70 are performed within a sixteenth processing time t16 determined in advance. The sixteenth processing time t16 is, for example, 2 ms.

The HSPDA process of FIG. 6 is performed as follows. The processes of Steps S31 to S33 are performed as in the case shown in FIG. 4 described above, and then, in Step S61, the CPU 83 obtains the FP data stored in the CPU connected external RAM in Step S33, and sets the FP data as a target for the FP process in the built-in RAM of the second 3G circuit unit 82.

Next, in Step S62, the main circuit of the second 3G circuit unit 82, specifically, the FP unit 56 reads the FP data stored in the built-in RAM of the second 3G circuit unit 82 in Step S61, at a maximum speed of 14.4 Mbps.

Next, the main circuit of the second 3G circuit unit 82, specifically, the FP unit 56 performs the FP process, specifically, the FP header analysis process and FP payload process. The FP header analysis process is similar to the FP header analysis process of Step S 15 shown in FIG. 3 described above, and the FP payload process is similar to the FP payload process of Step S20 shown in FIG. 3 described above.

Next, in Step S64, the main circuit of the second 3G circuit unit 82, specifically, the FP unit 56 stores the FP header process results and FP payload process results in the built-in RAM of the second 3G circuit unit 82 at a maximum speed of 14.4 Mbps.

Next, in Step S65, the CPU 83 obtains a MAC-d PDU from the built-in RAM of the second 3G circuit unit 82. Next, in Step S66, the CPU 83 stores, in the CPU connected external RAM, MAC-d PDUs for an amount obtained by multiplying the number of users by an amount for the number of MAC-d flows.

Following the process of Step S65, in Step S67, the CPU 83 performs the MAC-d PDU setting process. Specifically, in Step S67, the CPU 83 retrieves MAC-d PDUs for an amount required as the MAC-hs PDUs from the CPU connected external RAM based on an instruction from the scheduler, and then sets the retrieved MAC-d PDUs in the built-in RAM of the second 3G circuit unit 82.

Next, in Step S68, the main circuit of the second 3G circuit unit 82, specifically, the FP unit 56 retrieves MAC-d PDUs for an amount required as MAC-hs PDUs set in the built-in RAM in Step S67.

Next, in Step S69, the main circuit of the second 3G circuit unit 82, specifically, the FP unit 56 reassembles the MAC-d PDUs for an amount required as the MAC-hs PDUs retrieved in Step S68 into the format required for channel coding (see Reference 9), to thereby generate MAC-hs PDUs.

Next, in Step S70, the main circuit of the second 3G circuit unit 82, specifically, the FP unit 56 sets the MAC-hs PDUs generated in Step S69 as a target for the CHC_HS process in the main circuit of the first 3G circuit unit 81, specifically, the CHC_HS processing unit.

Though not included in the HSDPA process shown in FIG. 6, when the MAC-hs PDUs have been set in this manner, the main circuit of the first 3G circuit unit 81, specifically, the CHC_HS processing unit performs the CHC_HS process on the set MAC-hs PDUs. The CHC_HS process is the process of performing channel coding of the HSDPA data (for example, see Reference 9).

In the processes shown in FIGS. 5 and 6, as in the processes shown in FIG. 3, the CPU 83 sets data for a necessary amount in the second 3G circuit unit 82 as the FP process. The second 3G circuit unit 82 performs the FP process for an amount set by the CPU 83. The MAC-d PDUs that have been once subjected to the FP process are again provided to the CPU 83.

After obtaining the MAC-d PDUs, the CPU 83 temporarily stores them in the CPU connected external RAM. After that, the CPU 83 retrieves the MAC-d PDUs from the CPU connected external RAM for an amount required as MAC-hs PDUs based on an instruction from the scheduler and sets them in the built-in RAM of the second 3G circuit unit 82.

The second 3G circuit unit 82 retrieves MAC-d PDUs for an amount required as the MAC-hs PDUs set in the built-in RAM and assembles them into a format required for channel coding (see Reference 9) to generate MAC-hs PDUs, and then provides the CHC_HS processing unit with the generated MAC-hs PDUs.

The FP process is activated every 2 ms. The interrupt signals are provided from the second 3G circuit unit 82 to the CPU 83 at 2-ms intervals. A signal common to the LG process shown in FIG. 3 and other processes is used as this interrupt signal. This reduces interruptions to the CPU 83, lowering the processing load of the CPU 83.

While a configuration is made such that the second 3G circuit unit 82 provides interrupt signals to the CPU 83 in this embodiment, a configuration may be made such that the first 3G circuit unit 81 provides interrupt signals to the CPU 83.

Differently from the processes shown in FIG. 5, in the processes shown in FIG. 6, similarly to FIGS. 3 and 4, the second 3G circuit unit 82 can receive only the data for an amount required for processing FP data from the CPU 83 and can process that data. Specifically, the CPU 83 provides the second 3G circuit unit 82 with only the FP data to be desirably processed within a TTI, and the second 3G circuit unit 82 performs the FP process on only the data for an amount provided from the CPU 83. Thus, the second 3G circuit unit 82 needs not to recognize how much data is stored in the external RAM.

A summary of the division of functions in the processes shown in FIGS. 3 to 6 is as follows. In the processes shown in FIGS. 3 to 6, the downlink FP process includes the FP header analysis process and FP payload process. The FP header analysis process is the process of analyzing the FP header provided from a base station controller equipment and extracting whether or not the frame is a control frame, whether or not the frame is a data frame, and a data length, to thereby store the information for performing the FP payload process.

In the processes shown in FIGS. 3 to 6, the downlink FP payload process involves analyzing a CRC, retrieving a transport block, and passing the transport block to the channel coding process.

With reference to FIGS. 3 to 6, a hardware circuit carries out both of the FP header analysis process and FP payload process. A software program carries out the process of retrieving FP data from an external RAM and setting an FP header in a hardware circuit and the process of retrieving an FP payload from the external RAM stored address of an external RAM based on the FP header analysis results and setting the FP payload in the hardware circuit.

The hardware circuit inputs, to the software program, interrupt signals at 2-ms intervals being times in sub-frame units of the HSDPA, and the software program performs the setting process within 2 ms only after receiving a 2-ms-interval interrupt signal.

The above-mentioned process achieves a simple software process without any complexity, and thus, a CPU core does not need a very high-speed process. The software process executes external RAM access, whereby the hardware circuit needs not to make external RAM access by itself. Thus, an arbiter that has a mediation function of controlling an access conflict is not necessary, resulting in a reduction in circuit size. It can be said that the above-mentioned division of functions are optimum tasks for lowering the power consumption.

For the uplink FP process, the hardware circuit performs the process of assembling transport blocks after being decoded into FP data through demultiplexing (abbreviated as DEMUX), payload CRC calculation, quality estimate (QE) calculation, and header calculation. It suffices that the software retrieves FP data from the hardware circuit and sets the FP data in the external RAM without being in charge of almost no processes.

The software does not need a complex process but merely needs a simple process, and the hardware circuit is only required to perform a simple CRC calculation. As a result, the hardware circuit needs not to access the external RAM and thus does not need an arbiter that performs control to prevent an access conflict, whereby the circuit size can be reduced.

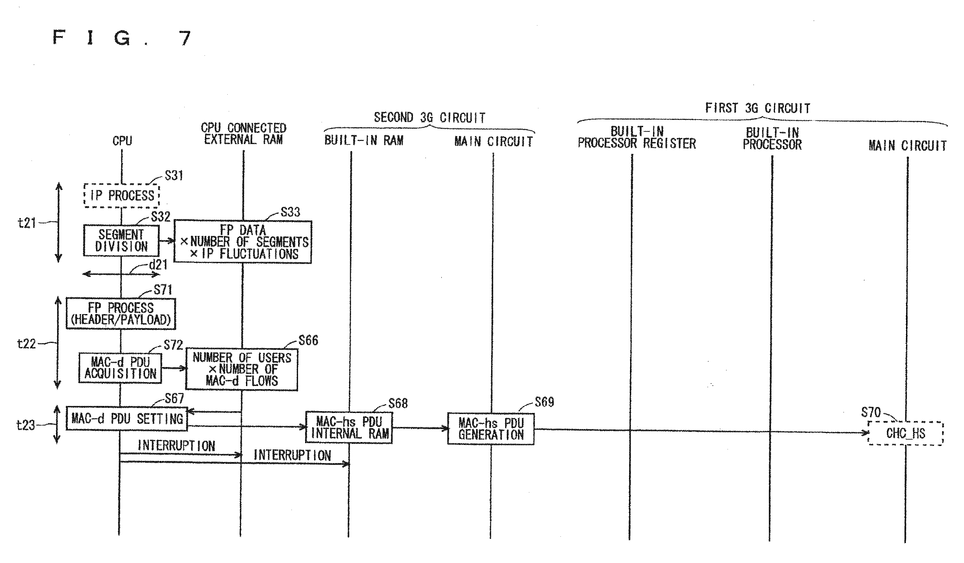

FIG. 7 is a sequence diagram showing an operating procedure in a case where the CPU 83 performs the FP process. For the processes shown in FIG. 7, the description common to the same processes shown in FIG. 6 is not given.

In the processes shown in FIG. 7, the processes from the IP process in Step S31 to the division of segments in Step S32 and to storing of the FP data in the CPU connected external RAM in Step S33 are performed within a twenty-first processing time t21 determined in advance. The twenty-first processing time t21 is, for example, 2 ms. The time of IP fluctuations is, for example, 390 ms.

In the processes shown in FIG. 7, the processes from the FP process in Step S71 to MAC-d PDU acquisition in Step S72 and to storing of the FP process results in the CPU connected external RAM in Step S66 are performed within a twenty-second processing time t22 determined in advance. The twenty-second processing time t22 is 2 ms × an amount for the number of users, for example, 2 ms × 4.

In the processes shown in FIG. 7, the processes from MAC-d PDU setting in Step S67 to storing of a MAC-hs PDU in the built-in RAM in Step S68, MAC-hs PDU generation process in Step S69, and to setting in the CHC_HS processing unit (see Reference 9) in Step S70 are performed within a twenty-third processing time t23 determined in advance. The twenty-third processing time t23 is, for example, 2 ms.

The processes shown in FIG. 7 are performed as follows. The processes of Steps S31 to S33 are performed as in the case shown in FIG. 3 described above, and then, in Step S71, the CPU 83 performs the FP process, specifically, the FP header analysis process and FP payload process.

Following the FP process of Step S71, in Step S72, the CPU 83 obtains MAC-d PDUs. Next, in Step S66, the CPU 83 stores, in the CPU connected external RAM, MAC-d PDUs for an amount obtained by multiplying the number of users by an amount for the number of MAC-d flows. After that, the processes of Steps S67 to S70 are performed as in FIG. 6.

In the processes shown in FIG. 7, the functions of the FP processes are tasked to the CPU 83, which eliminates the access time for data writing and reading in and from the second 3G circuit unit 82 by the CPU 83. This can lower the processing load of the CPU 83.

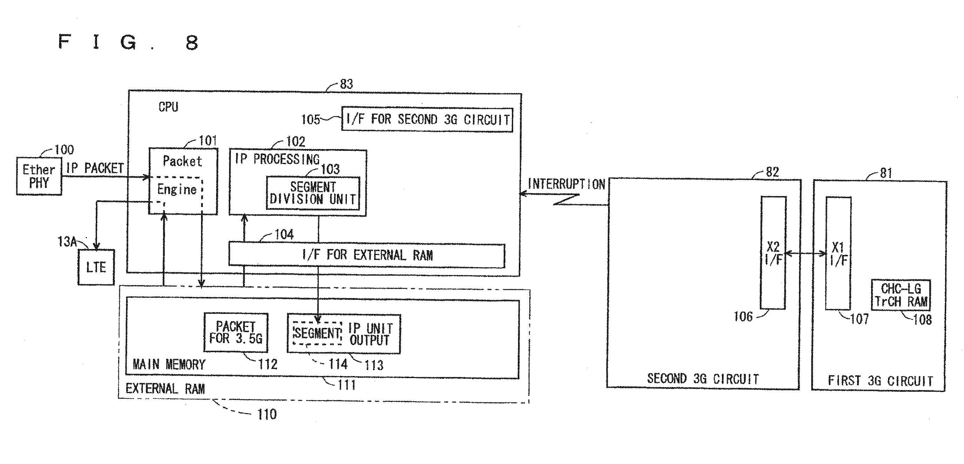

FIG. 8 is a block diagram showing a configuration of a segment division unit 103 that performs the process of dividing segments in the processes shown in FIGS. 3 to 7.

All data of the IP packets from the base station controller equipment for Ethernet 100 is temporarily stored per se as packets for 3.5G in a packet storage unit for 3.5G 112 of a main memory 111 of an external RAM 110 connected to the CPU 83, by the software inside the CPU 83 shown in FIG. 2, a coprocessor (hereinafter, also referred to as a "packet engine") 101, or the like. At that time, the CPU 83 can access the external RAM 110 at high speed if a direct memory access (abbreviated as DMA) function is available for access.

After that, the data is retrieved by the CPU 83 again and is subjected to IP header analysis by an IP processing unit 102. The data subjected to IP header analysis or the like is stored again in the external RAM 110 via an I/F for external RAM 104 while being divided per, for example, user or service type in the segment division unit 103. Specifically, the data is stored in a segment storage unit 114 of an IP unit output storage unit 113 of the external RAM 110.

The CPU 83 and second 3G circuit unit 82 may perform transmission using a PCI-e as an I/F for second 3G circuit if a high-speed transmission is required or may be connected using a local bus with low power consumption if a required transmission speed is satisfied.

The second 3G circuit unit 82 inputs interrupt signals to the CPU 83 at 2-ms intervals, and the CPU 83 can access the second 3G circuit unit 82 periodically. In the data transmission between the second 3G circuit unit 82 and first 3G circuit unit 81, data can be transmitted/received by providing an X2 interface (I/F) 106 and an X1 interface (I/F) 107 on the second 3G circuit unit 82 and on the first 3G circuit unit 81, respectively.

While description is given of the process in a case where a CHC-LG TrCH RAM 108 located in the first 3G circuit unit 81 is a legacy, the CHC-LG TrCH RAM 108 is a CHC-HS in HSDPA. TrCH is an abbreviation of a transport channel (see Reference 9).

FIG. 9 is a diagram showing a state in which FP data is divided into segments. As shown in FIG. 9, the FP data is divided per, for example, user or service type and is stored in the external RAM. The external RAM stores, as information on each segment, "segment number", "channel type (channel)", "user name (user#)", "service type", and "area of use (byte)", as shown in FIG. 9, for example.

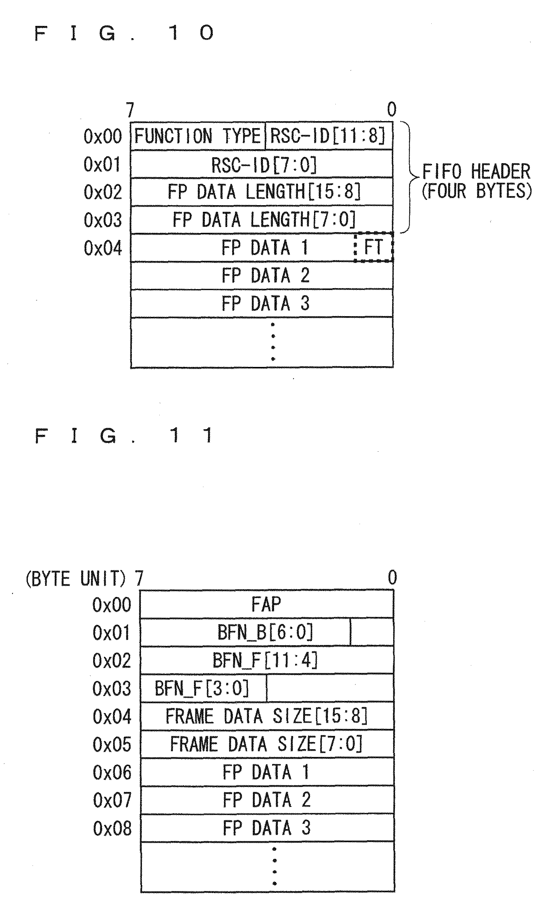

FIG. 10 is a diagram showing a format of data to be processed in the IP process. A remote system control-identification (RSC-ID) is an identifier added to an IP packet.

FIG. 11 is a diagram showing a format when data is stored from a segment division unit to an external RAM. A femto access point (abbreviated as FAP) is an identifier for use in user identification and service identification. A Node B specific frame number (abbreviated as BFN) is a frame counter value synchronized with a base station timing. BFN_B and BFN_F are counted up at 125-µs intervals and 10-ms intervals, respectively.

As described above, the IP process and FP process can be carried out using the CPU 83 and the external RAM 110 connected to the CPU 83, so that the hardware circuit needs not to perform access control which is normally required when the hardware circuit includes the external RAM 110. Thus, the circuit size of the second 3G circuit unit 82 can be reduced, results in in reductions in size and power consumption.

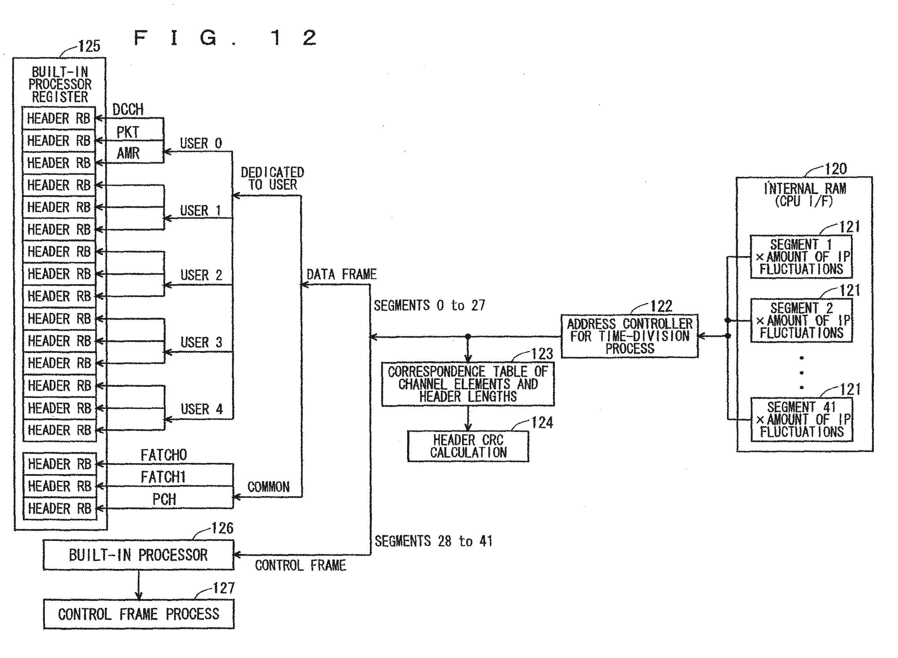

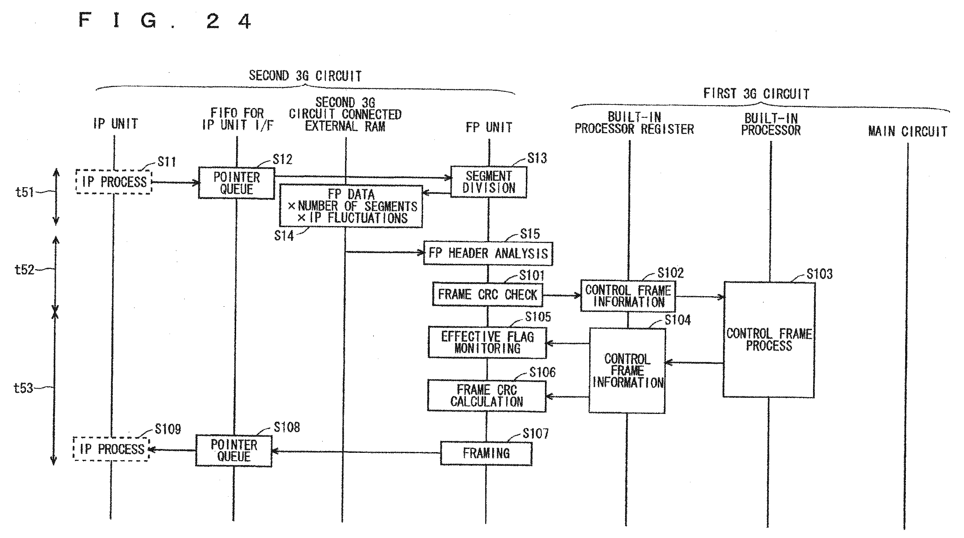

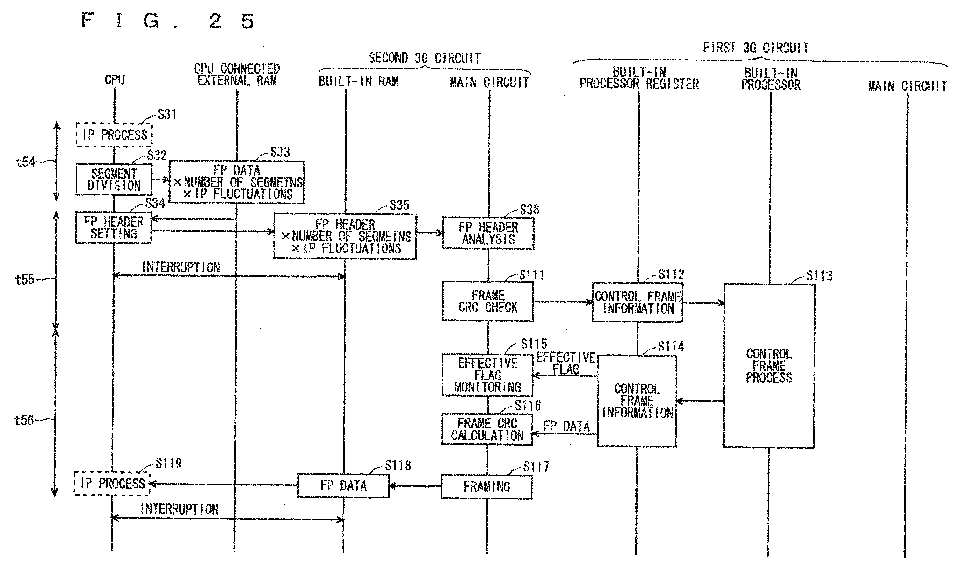

FIGS. 12 to 15 show the configuration for carrying out a downlink legacy (abbreviated as LG) process of the FP unit 56. LG refers to the channels except for the HSDPA and EUL. The processes shown in FIG. 12 to 15 correspond to the processes of FIGS. 3 and 4 described above and FIGS. 24 and 25 described below before they are turned around, namely, the processes up to the FP header information management process of Steps S17 and S38 and the processes up to the control frame process of Steps S103 and S113. Assuming a small base station device such as a femtocell, the configurations of FIGS. 12 to 15 support four users and also transiently support five users for attach.

FIG. 12 is a block diagram showing a configuration for carrying out a header analysis process. The header analysis process shown in FIG. 12 is activated by a 10-ms pulse per user or per SCCPCH as an operation trigger. In the header analysis process, an amount of 18 channels and an amount of 14 channels of control frames are time-shared.

For the header analysis process, a plurality of segments of internal RAMs 120 and 121 of the CPU I/F are prepared in consideration of an amount of IP fluctuations, and an address controller 122 capable of processing those through time division is provided. Then, whether the FP is a data frame or control frame is identified, and the data frame is set in a register 125 of the built-in processor I/F.

If the control frame is a legacy channel, it is set in a built-in processor 126. If it is an HS-DSCH of an HSDPA, header information is stored in a CPU register in place of the built-in processor 126. At that time, with the use of an association of a channel type and a header length, a header CRC calculation unit 124 calculates a header CRC and performs CRC check using a correspondence table contained in an inside 123 in advance. The header length is, for example, five bytes in a case of audio because ClassA/B/C is multiplexed to configure one FP (see Reference 4).

As described above, a plurality of segments, specifically, FP headers are processed together for an amount of IP fluctuations through time division, so that the FP header information is analyzed immediately without any increase in circuit size to be notified the built-in processor 126 or CPU 83. This allows for FP header analysis, whereby the entire FP payload process can be processed at high speed.

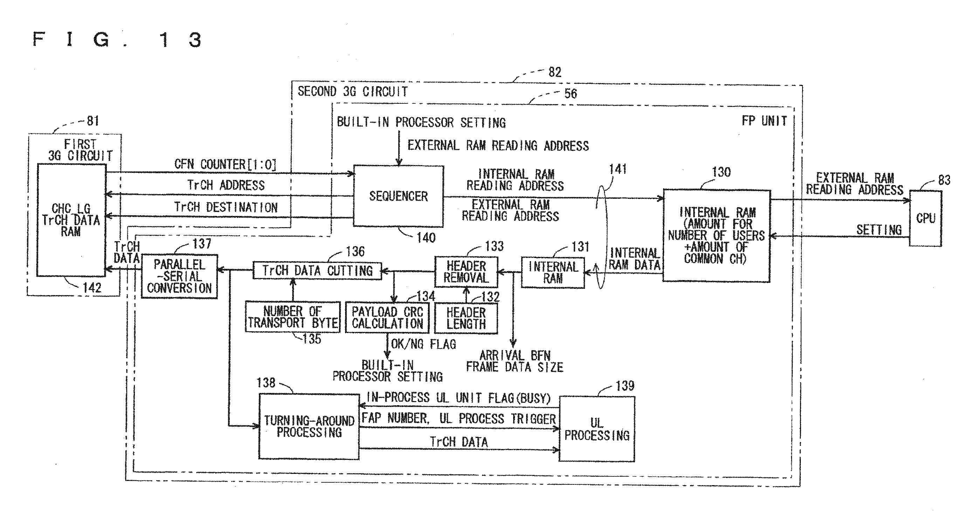

FIG. 13 is a block diagram showing a configuration for carrying out the payload process. In the description below, the configuration shown in FIG. 13 may be referred to as a "payload processing unit". An operation trigger of the payload process shown in FIG. 13 occurs once every 10 ms. In the payload process, an amount obtained by adding an amount of five users and an amount of common CH is time-division multiplexed.

As to the payload process, setting from the CPU 83 to the FP unit 56 of the second 3G circuit unit 82 is performed via an internal RAM 130. While the TTI is 10 ms, access can be made every 2 ms, and thus, the internal RAM 130 is only required to prepare an amount obtained by adding an amount for the number of users and an amount of common CH and does not need to prepare two surfaces for each of the channels. Specifically, the surfaces other than those for an amount obtained by adding five users and an amount of common CH is not necessary.

The number of effective parameters indicated by reference numeral "141", namely, the number of processes is a maximum of 18 loops. This number of loops is obtained as the number of users x 3 + an amount of common channels × 3, specifically, five users × 3 + an amount of a common channel × 3 = 18.

The internal RAM information retrieving unit 131 retrieves the arrival BFN information of the data stored in the internal RAM 130 and the information on a frame data size. A header removal unit 133 removes a header based on the information on the FP header length that is stored in an FP header length storage unit 132. Then, a payload CRC calculation unit 134 calculates a payload CRC and sets OK/NG results being CRC calculation results in the built-in processor.

The payload data is cut by a TrCH data cutting unit 136 as a transport channel (TrCH) through a TrCH data cutting process, based on the number of transport bytes stored in a transport byte storage unit 135. The cut TrCH data is stored externally, specifically, stored in a CHC_LG TrCH data RAM 142 located in the CHC_LG unit of the first 3G circuit unit 81, via a parallel-serial conversion unit 137.

The parallel-serial conversion unit 137 operates normally if an error occurs in payload CRC. Specifically, the parallel-serial conversion unit 137 writes TrCH data and notifies the built-in processor of header information if an error occurs in payload CRC.

A sequencer unit 140 provides the outside, specifically, the first 3G circuit unit 81 also with the information regarding in which area of the TrCH data RAM 142 the information is stored. The sequencer unit 140 is activated every 10 ms, notifies the CPU 83 of the external RAM reading address information from the built-in processor via the internal RAM 130, and issues a data reading request from the internal RAM 130.

The payload processing unit shown in FIG. 13 retrieves FP data from the internal RAM 130 based on the data reading request and starts the process. In a case of turning around the TrCH data to the higher layer as a test function, the payload processing unit cuts TrCH data, and then transmits the data to a UL processing unit 139 using the turning-around process function of a turning-around processing unit 138.

The FP payload process of the second 3G circuit unit 82 requires the CPU 83 to set FP payload data for an amount required. The CPU 83 sets, in the second 3G circuit unit 82, FP payload data for an amount of the FP payload process, minimizing the traffic between the circuit and processor.

As a result, an increase in software processing load can be prevented. Also, the second 3G circuit unit 82 needs to process only one FP payload every setting from the CPU 83, preventing a circuit size from increasing.

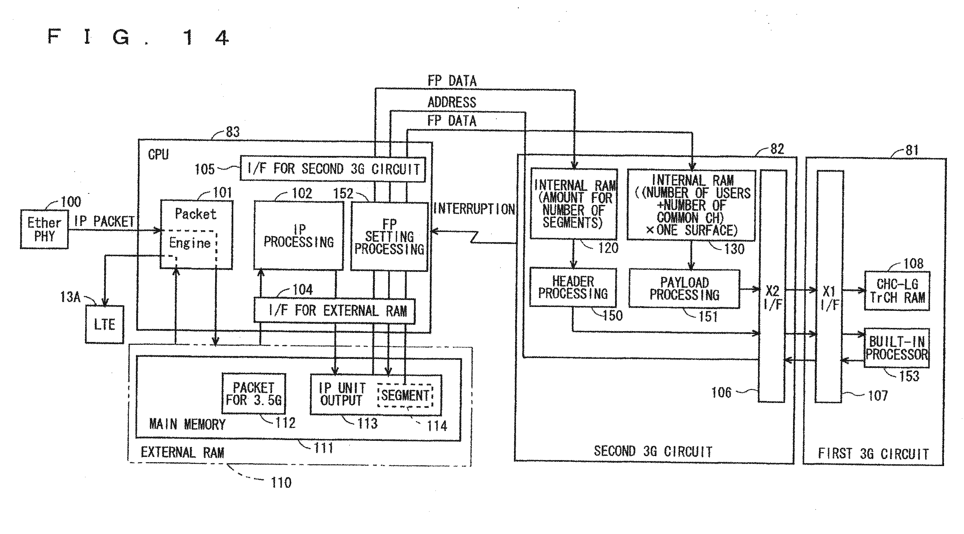

FIG. 14 is a block diagram showing an overall configuration of the base station device 2 including the CPU 83, second 3G circuit unit 82, and first 3G circuit unit 81. FIG. 14 does not show the radio transmission/reception unit 71 shown in FIG. 2 described above. The detailed descriptions of the units shown in FIG. 14 are similar to the descriptions of FIG. 4.

The first 3G circuit unit 81 includes a built-in processor 153 and notifies the CPU 83 of the information of an FP data retrieved initial address, namely an address of the CPU connected external RAM, via the second 3G circuit unit 82.

An FP setting processing unit 152 of the CPU 83 transports the FP data divided into segments to the second 3G circuit unit 82. The transported FP data is provided to a header processing unit 150 of the second 3G circuit unit 82 via internal RAMs 120 for the number of segments, and is subjected to an FP header process by the header processing unit 150 of the second 3G circuit unit 82.

Header analysis information is notified the built-in processor 153 of the first 3G circuit unit 81. The internal RAMs 120 for the number of segments include those for 32 segments obtained by adding an amount of legacies for 18 CHs and an amount of control frames for 14 CHs. The control frame includes an HS.

The built-in processor 153 notifies the CPU 83 of the retrieved initial address of the FP data to be processed next, based on the information above. The CPU 83 retrieves the FP data from the external RAM 110 based on the information above and sets FP data in the second 3G circuit unit 82.

The set FP data is provided to a payload processing unit 151 via the internal RAM 130 of the second 3G circuit unit 82, and a transport channel (TrCH) thereof is retrieved by the payload processing unit 151 through the payload process (see Reference 9), which is set in the CHC-LG TrCH RAM 108 of the first 3G circuit unit 81.

After that, the CHC-LG processing unit in the first 3G circuit unit 81 performs a CHC-LG process, specifically, a channel coding process (see Reference 9). The IP processing unit 102 and packet engine 101 perform the processes same as those shown in FIG. 8 described above, which are not described here.

The CPU 83 notifies the second 3G circuit unit 82 of an amount of IP fluctuations as to only FP headers, and as to FP payloads, merely retrieves them for an amount to be processed from the external RAM 110 and sets them in the second 3G circuit unit 82. This can minimize the access between the CPU 83 and second 3G circuit unit 82. The configuration is made such that the external RAM 110 is connected to the CPU 83, whereby the second 3G circuit unit 82 does not require an arbiter function of controlling access to the external RAM. This can lower the circuit size of the second 3G circuit unit 82.

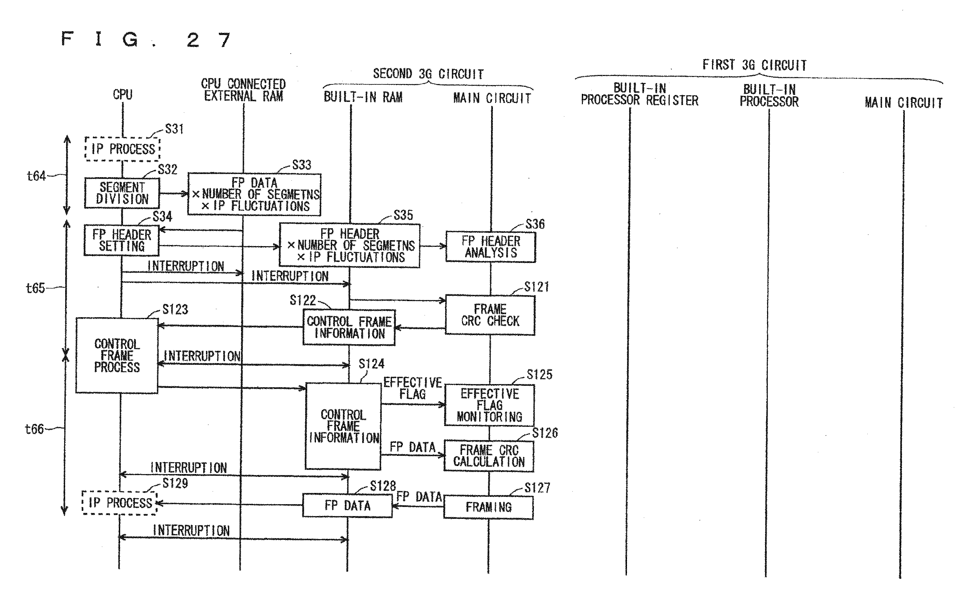

In the configuration shown in FIG. 14, 27 segments, that is, a total sum of five users of DL DCH (DCCH, PKT, AMR), an amount for five users of a DCH control frame, FACHs #0 and #1, PCH, FACHs #0 and #1, DL ynch, PCHDL Sync, and DL Node Sync, × the number of areas is a maximum use number of segments for each 2 ms. Only the header information is stored.

The built-in processor 153 of the first 3G circuit unit 81 notifies, after analyzing the FP header information, the CPU 83 of the external RAM retrieved address via the second 3G circuit unit 82 or directly. The CPU 83 sets, in the internal RAM 120 of the second 3G circuit unit 82, the FP data stored in the designated external RAM retrieved address. The second 3G circuit unit 82 retrieves FP data from each segment of the internal RAM 120 and performs header analysis.

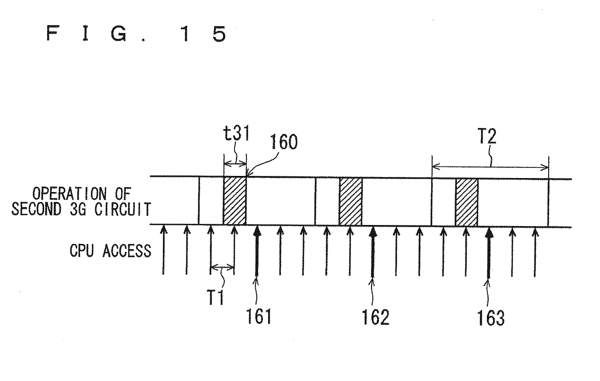

FIG. 15 is a diagram for describing the timings of the second 3G circuit unit 82 and CPU I/F. The second 3G circuit unit 82 operates at intervals represented by reference symbol "T2", for example, 10-ms intervals, and the CPU 83 can access at intervals represented by reference numeral "T1", for example, 2-ms intervals. Thus, for example, the provision of a reading completion flag 160 as shown in FIG. 15 can prevent access conflicts between the CPU 83 and second 3G circuit unit 82. This also enables the CPU 83 and the second 3G circuit unit 82 to access an I/F portion without any conflict if an I/F does not have a double-surface structure.

A writing time t31 for writing FP data in the CPU I/FRAM (registered trademark) is less than 2 ms. A reading completion flag indicated by reference numeral "160" is "1". After the CPU 83 sets an FP data setting timing, the writing completion flags represented by reference numerals "161", "162", and "163" are set to "0". In other words, when detecting that the reading completion flag 160 is "1", the CPU 83 sets FP data and sets the writing completion flags 161, 162, and 163 to "0".

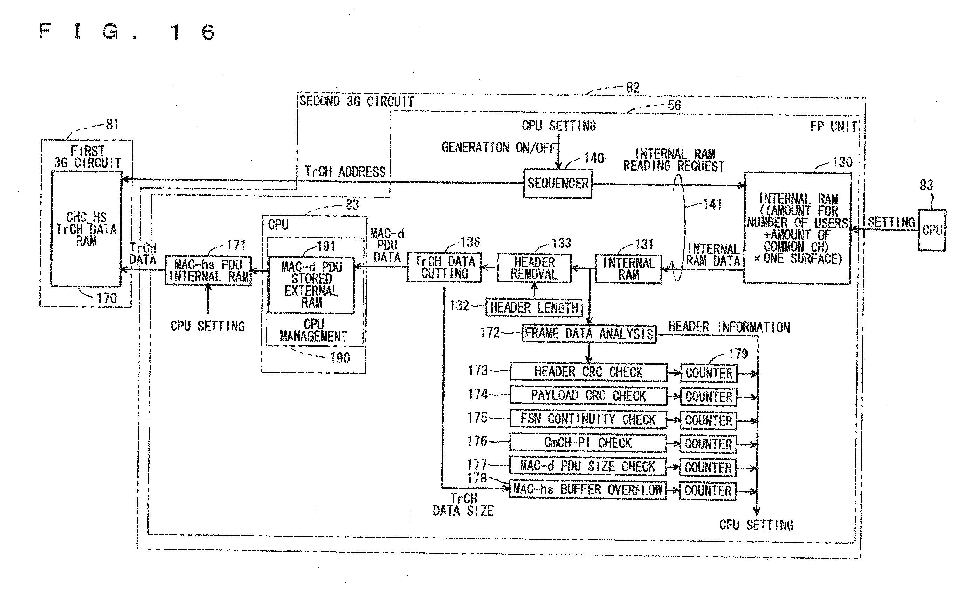

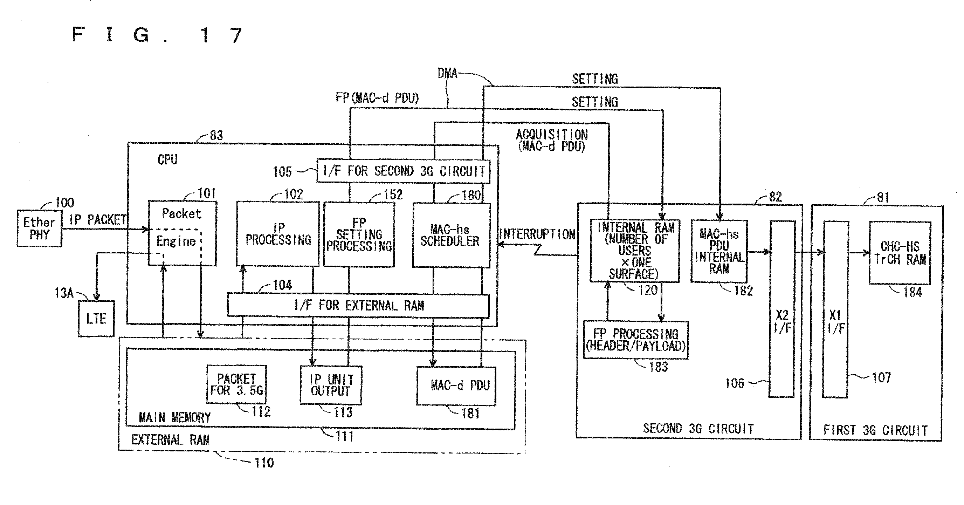

FIGS. 16 and 17 show the configuration for achieving the HSDPA process of the FP unit 56. The name of the HSDPA as a transport channel is HS-DSCH (see Reference 5). The processes shown in FIGS. 16 and 17 correspond to the processes up to the frame CRC check of FIGS. 5 to 7 and FIGS. 26 to 28 described below. Assuming a small base station device such as a femtocell, the configurations of FIGS. 16 and 17 support four users and also transiently support five users.

FIG. 16 is a block diagram showing a configuration of the second 3G circuit unit 82. FIG. 17 is a block diagram showing a configuration including the CPU 83 and external RAM 110.

The configuration for achieving an HSDPA of the FP unit 56 shown in FIG. 16 is activated once every 2 ms being a TTI of the HSDPA. The CPU 83 sets FP data related to the HSDPA to be processed at 2-ms intervals.

Based on the setting of parameters for the sequencer unit 140 from the CPU 83, the second 3G circuit unit 82 causes the internal RAM reading unit 131 to read the FP data from the internal RAM 130, the header removal unit 133 to remove an FP header, the frame data analysis unit 172 to analyze frame data, the TrCH data cutting unit 136 to perform an FP payload, specifically, a TrCH data cutting process. Data is stored in the external RAM of the CPU after the process common to downlinks as described above, whereby timing absorption is completed. Thus, there is no problem with the internal RAM 130 having only one surface.

In cutting of TrCH data, the second 3G circuit unit 82 causes a header CRC check unit 173, FP payload CRC check unit 174, FSN continuity check unit 175, MAC-d PDU size check unit 177, and MAC-hs buffer overflow check unit 178 to check the header CRC, payload CRC, FSN continuity, MAC-d PDU size, and MAC-hs buffer overflow, based on the information on the TrCH data size, and reports the statistical information such as the number of error counts in the counter 179 to the CPU 83.

The MAC-d PDU retrieved by the TrCH data cutting unit 136 is stored in a MAC-d PDU storing external RAM 191 of a CPU management unit 190, via the CPU 83 once. The CPU 83 passes data again to the second 3G circuit unit 82 as a MAC-hs PDU via an internal RAM, specifically, via a MAC-hs PDU internal RAM 171.

The second 3G circuit unit 82 assembles the data as a MAC-hs PDU based on the information such as the MAC-hs header information, user number, MAC-d flow number, process number, the number of combination of MAC-d PDUs and a size thereof, and new/retransmission data identification information from the CPU 83, and passes the data to a CHC_HS TrCH data RAM of the first 3G circuit unit 81 as TrCH data.

The process may be such that data is passed to the CPU 83 after being assembled as a MAC-hs PDU. In that case, the second 3G circuit unit 82 merely passes the MAC-hs PDU passed from the CPU to the first 3G circuit unit 81.

The address information regarding in which of the CHC_HS TrCH data RAM the data has been stored is notified from the sequencer unit 140 of the second 3G circuit unit 82 to the first 3G circuit unit 81. Consequently, the circuit achieves such an effect that the circuit size is reduced through time-division multiplexing of a value obtained by multiplying an amount for the number of users by the number of MAC-d flows, for example, an amount for ten times of a value obtained by multiplying an amount of five users by "2" as MAC-d flows.

FIG. 17 is a diagram showing a configuration for carrying out the HSDPA process of the FP unit 56. The operations of the IP processing unit 102, packet engine 101, and the like are identical to the processes shown in FIG. 8 described above, and thus are not described here. The CPU 83 retrieves the FP data to be processed from the external RAM 110 and sets it in the internal RAM 120 of the second 3G circuit unit 82. The FP process, specifically, the header analysis process and payload process are performed, and then the process results are passed to the CPU 83 again via the internal RAM 120.

A MAC-hs scheduler 180 of the CPU 83 retrieves the MAC-d PDU after the FP process from the internal RAM 120 of the second 3G circuit unit 82 and stores it in a MAC-d PDU area 181 of the external RAM 110. After that, the MAC-hs scheduler 180 sets, in a MAC-hs PDU internal RAM 182 of the second 3G circuit unit 82, the PDUs for the required number as the MAC-hs PDUs, based on the scheduling results, specifically, transmission speed judgment results.

The second 3G circuit unit 82 stores the MAC-hs PDUs in the CHC-HS TrCH RAM 184 of the first 3G circuit unit 81 by means of an X2 interface 107 and an X1 interface 106 being interfaces (I/Fs) between the first 3G circuit unit 81 and itself. The CHC-HS processing unit of the first 3G circuit unit 81 performs channel coding on the data stored in the CHC-HS TrCH RAM (see Reference 9).

A PCI-e, local bus, or the like may be used as the I/F for second 3G circuit that is an I/F between the CPU 83 and second 3G circuit unit 82. The use of the local bus results in lower power consumption.

The use of a DMA function in the data transport between the CPU 83 and second 3G circuit unit 82 allows for high-speed data transport without any load on the CPU core. The CPU 83 is activated upon interruptions at 2-ms intervals from the second 3G circuit unit 82 or first 3G circuit unit 81, and is thus capable of accessing the second 3G circuit unit 82 without increasing a load at TTI-intervals of the HSDPA.

With reference to FIGS. 12 to 17, the external RAM 110 is connected to the CPU 83 that executes a software program, and the external RAM 110 is not connected to the circuit side, so that an arbiter, which needs to be mounted when the external RAM 110 is connected on the circuit and has a mediation processing function, becomes unnecessary. This reduces a circuit size and leads to lower power consumption, contributing to the miniaturization of the base station device 2.

### Second Embodiment

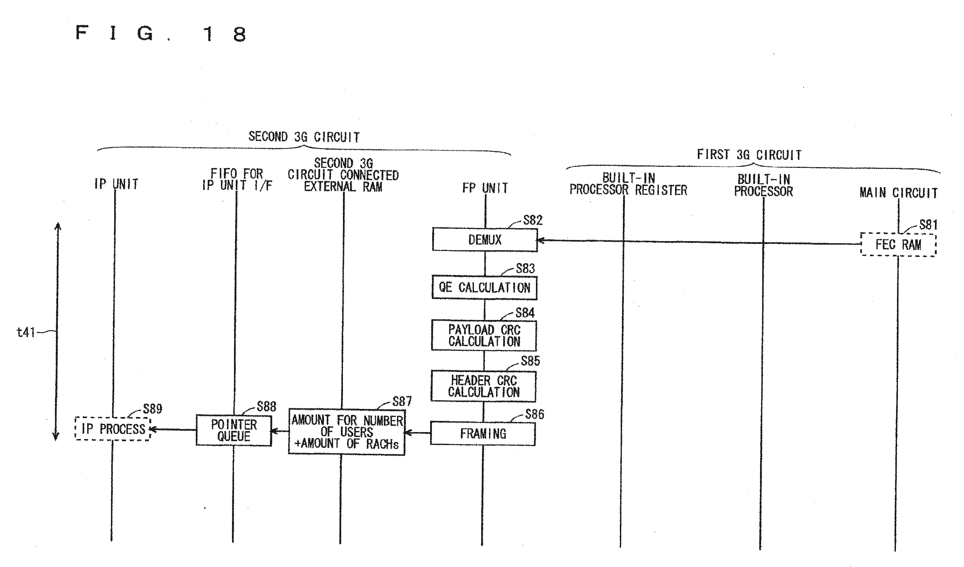

FIG. 18 is a sequence diagram showing an operating procedure of an uplink legacy (abbreviated as LG) process in the FP process of the W-CDMA system in a case where an external RAM is connected to the second 3G circuit unit 82.

In the processes shown in FIG. 18, the processes from the process in Step S81 to the DEMUX process in Step S82, QE calculation in Step S83, payload CRC calculation in Step S84, header CRC calculation in Step S85, framing process in Step S86, storing of FP data in the second 3G circuit connected external RAM in Step S87, storing of a pointer queue in Step S88, and to the IP process in Step S89 are performed within a forty-first processing time t41 determined in advance. The forty-first processing time is, for example, 10 ms.

The uplink LG process shown in FIG. 18 is performed as follows. In Step S81, the main circuit of the first 3G circuit unit 81 provides the FP unit 56 of the second 3G circuit unit 82 with the data of the transport block (see Reference 9) after error correction decoding that has been stored in the FEC RAM. Error correction decoding is, for example, Viterbi-decoding or turbo decoding, or removal of CRC (see Reference 9).

In Step S82, the FP unit 56 of the second 3G circuit unit 82 performs the DEMUX process. The DEMUX process is the process of combining pieces of data of the transport block after error correction decoding that have been provided from the main circuit of the first 3G circuit unit 81 in Step S81 per transport channel such that a piece of FP data is configured.

Next, in Step S83, the FP unit 56 performs a QE calculation. QE means a quality level. The QE calculation is the process of judging a quality level from the number of error correction bits of uplink data and the number of pilot symbols (frame synchronization word, see Reference 4).

Next, in Step S84, the FP unit 56 calculates a payload CRC. The payload CRC calculation is the process of calculating a CRC to be added to an FP payload.

Next, in Step S85, the FP unit 56 calculates a header CRC. The header CRC calculation is the process of calculating a CRC to be added to an FP header.

Next, in Step S86, the FP unit 56 performs framing. Framing is the process of combining the QE, FP header, and FP payload to generate one piece of FP data.

Next, in Step S87, the FP unit 56 stores, of the FP data generated in Step S86, the FP data to which an amount for the number of users and an amount of RACHs have been added in the second 3G circuit connected external RAM.

Next, in Step S88, the FIFO for IP unit I/F of the second 3G circuit unit 82 performs the process of storing a pointer queue. The process of storing a pointer queue is carried out by a FIFO via which the FP data is provided to the IP unit 58 of the second 3G circuit unit 82. Next, in Step S89, the IP unit 58 performs the IP process.

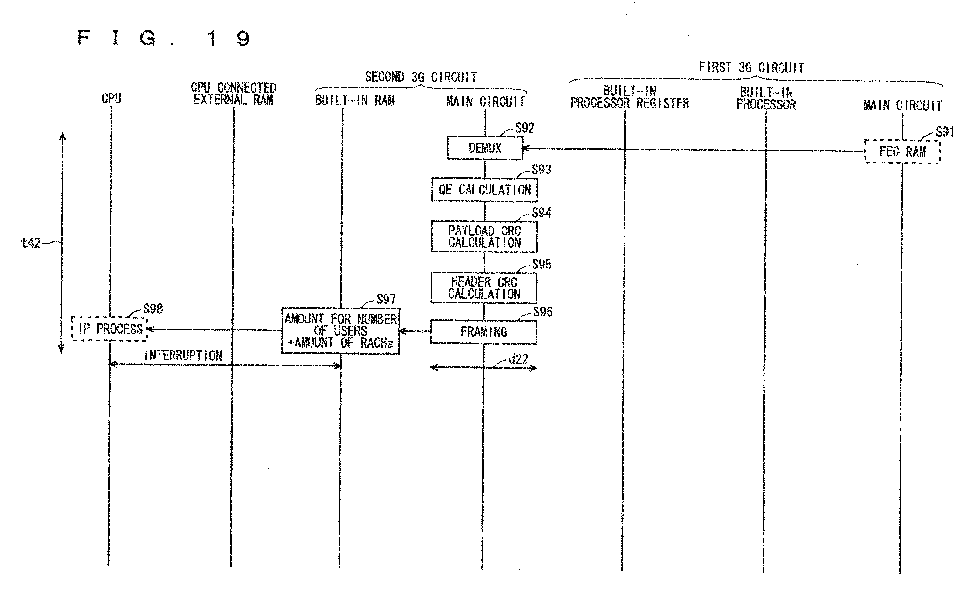

FIG. 19 is a sequence diagram showing an operating procedure of an uplink legacy process in the FP process of the W-CDMA system in a case where an external RAM is connected to the CPU 83. For the processes shown in FIG. 19, the description common to the same processes shown in FIG. 18 is not given.

In the processes shown in FIG. 19, the processes from the process in Step S91 to the DEMUX process in Step S92, QE calculation in Step S93, payload CRC calculation in Step 74S94, header CRC calculation in Step S95, framing process in Step S96, storing of the FP data obtained by adding an amount for the number of users and an amount of RACHs in the second 3G circuit connected external RAM in Step S97, and to the IP process in Step S98 are performed within a forty-second processing time t42 determined in advance. The forty-second processing time is, for example, 10 ms.

The uplink LG process shown in FIG. 19 includes the processes of Steps S91 to S98. The processes of Steps S91 to S98 are performed similarly to the processes of Steps S81 to S87 and S89 of FIG. 18 described above.

In the process shown in FIG. 19, in Step S97, the main circuit of the second 3G circuit unit 82, specifically, the FP unit 56 stores the FP data generated in Step S96 in the built-in RAM. Next, in Step S98, the CPU 83 obtains the FP data from the built-in RAM and performs the IP process.

In the process shown in FIG. 19, differently from the process shown in FIG. 18, the second 3G circuit unit 82 is not activated upon pulse signals at intervals d22 but is activated per user. The IP process of Step S98 is carried out by the CPU 83, and thus, the CPU obtains the data after the FP process that has been obtained by adding the number of users, for example, five users and an amount of RACHs from the second 3G circuit unit 82 at 10-ms intervals using the activation process at 2-ms interruptions. The 2-ms interruptions are interruptions provided at regular intervals from the first 3G circuit unit 81 or the second 3G circuit unit 82 to the CPU 83.

Through the above, if the CPU 83 can obtain the FP data obtained by adding the number of users, for example, five users and an amount of RACHs at 10-ms intervals, no processing delay occurs, compared with the case shown in FIG. 18. Thus, it is conceivable that the functions of the IP process are tasked to the CPU 83. Also in a case where a configuration is made in downlink such that an external RAM is implemented in the CPU 83, an uplink processing delay is not affected, causing no problem.

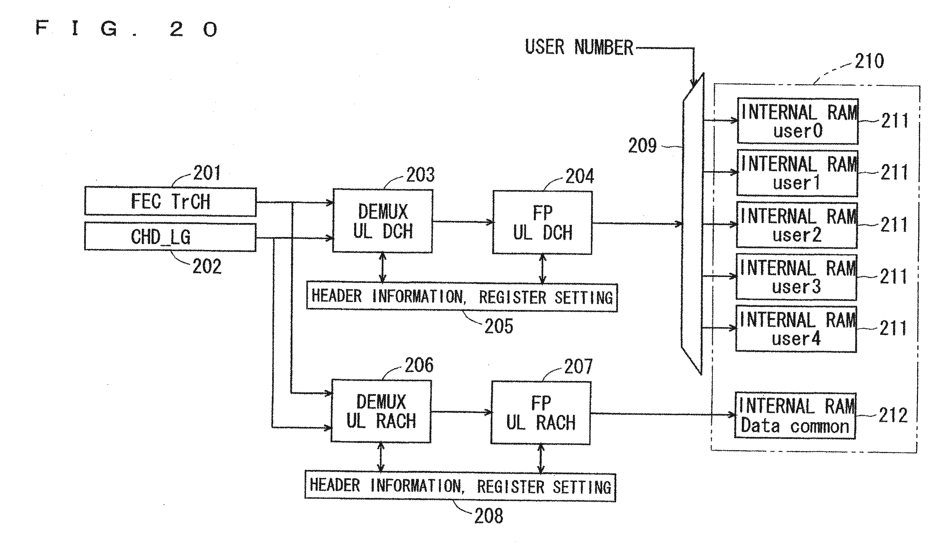

FIGS. 20 to 23 show the configurations for performing the uplink legacy process of the FP unit 56. The processes shown in FIGS. 20 to 23 correspond to the processes after the control frame process of FIGS. 18 and 19 and FIGS. 24 and 25 described below. Assuming a small base station device such as a femtocell, the configurations of FIGS. 20 to 23 support four users and also transiently correspond to five users.

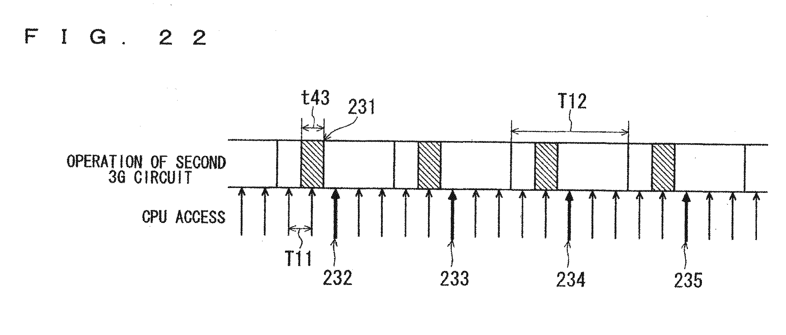

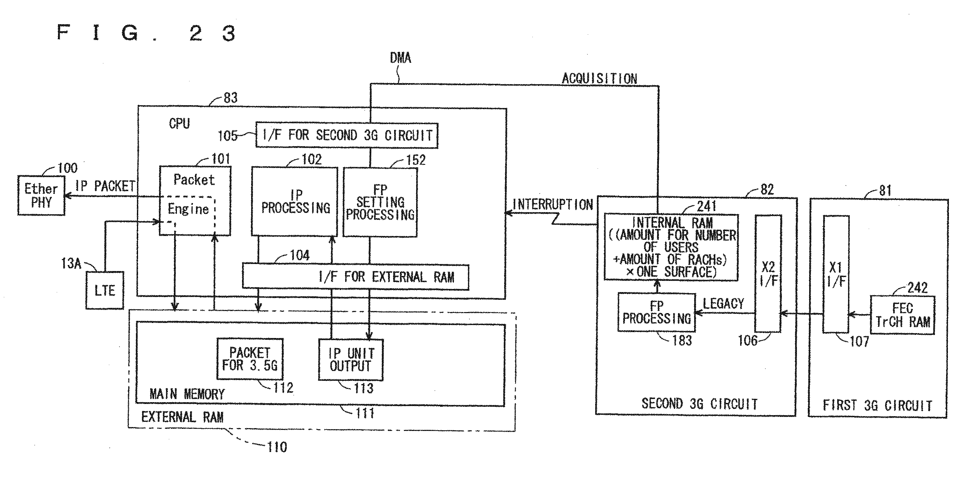

FIG. 22 is a diagram for describing timings of the second 3G circuit unit 82 and CPU I/F. FIG. 23 shows an overall configuration including the CPU 83 and external RAM.

FIG. 20 is a diagram showing a detailed configuration of the second 3G circuit unit 82. The data of the TrCH of the DCH, that has been subjected to error correction decoding with no problem found in CRC check, is passed from an FEC TrCH unit 201 to a DEMUX UL DCH unit 203. The parameter information on data, for example, a transport format combination indicator (TFCI) or the like is passed from a CHD_LG unit 202. The TFCI is control information such as rate information.

The DEMUX UL DCH unit 203 performs the process such as multiplexing of Classes A, B, and C based on the header information and register setting stored in the storage unit 205, in a case of voice. The data is assembled by an FP UL DCH unit 204 into a frame format of the FP data based on the header information and register setting stored in a storage unit 208, and is then stored per user in a per-user internal RAM 211 of an internal RAM 210 via a distributor 209. The CPU 83 retrieves data from the per-user internal RAM 211 once every 10 ms and stores it in the external RAM 110.

The TrCH of the RACH is passed to a DEMUX UL RACH unit 206, and the data required for configuring an FP format is gathered. The data is assembled into an FP format by an FP UL RACH unit 207 and is then stored in a data common internal RAM (data common) 212 of the internal RAM 210. After that, the CPU 83 retrieves data from the data common internal RAM 212 once every 10 ms.

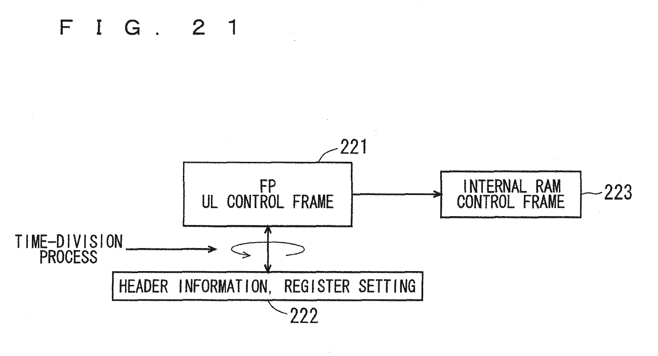

FIG. 21 is a diagram showing a configuration for carrying out the control frame process. As to the control frame process, the second 3G circuit unit 82 performs the FP uplink control frame process by an FP uplink control frame (FP UL control frame) processing unit 221 of the second 3G circuit unit 82, based on the header information and register setting stored in a storage unit 222.

The second 3G circuit unit 82 stores the processed results in a control frame internal RAM 223. The CPU 83 retrieves data from a control frame internal RAM 223 once every 10 ms and stores it in the external RAM 110.

The CPU 83 obtains data from an internal RAM 241 of the second 3G circuit unit 82 based on interrupt signals at 2-ms intervals, which are notified from the first 3G circuit unit 81 or second 3G circuit unit 82 and are common to the downlink legacy process and HSDPA process. The unification of interrupt signals for the CPU 83 described above can reduce a processing load on the CPU 83.

The CPU 83 may access the second 3G circuit unit 82 at 10-ms intervals being TTIs of the legacy but can access the second 3G circuit unit 82 at 2-ms intervals. Thus, it suffices to prepare internal RAMs 241 as many as the users and it is not required to prepare two surfaces thereof for each of the number of users. This can prevent an increase in internal RAMs 241. If a RAM is configured as a logical circuit, such an effect that an increase in circuit size can be prevented is achieved.

FIG. 22 is a diagram for describing timings of the second 3G circuit unit 82 and CPU I/F. The second 3G circuit unit 82 operates at intervals represented by reference symbol "T12", for example, 10-ms intervals, and the CPU 83 can access the second 3G circuit unit 82 at intervals represented by reference symbols "T11", for example, 2-ms intervals.

The second 3G circuit unit 82 stores the results of the FP data process in the internal RAM after checking that a writing completion flag is "0", and then sets a writing completion flag represented by reference numeral "231" to "1". A writing time t43 for writing the FP data to the CPU I/F RAM is less than 2 ms.

The CPU 83 obtains data after the FP data process from the internal RAM after checking that the writing completion flag is 1, and then sets writing completion flags represented by reference numerals "232"," 233", "234", and "235" to "0".

This can avoid a situation in which an access conflict occurs between the second 3G circuit unit 82 and the CPU 83, leading to an effect that the surfaces of the internal RAM do not need to be doubled and an increase in the number of internal RAMs can be prevented. Also, another effect that an increase in circuit size can be prevented is obtained in a case where a RAM is configured as a logical circuit. In other words, an effect of a reduction in circuit size can be anticipated.

FIG. 23 is a diagram showing an overall configuration including the CPU 83, external RAM 110, and first and second 3G circuit units 81 and 82 in the FP process of the uplink legacy process.

Data is transmitted from an FEC TrCH RAM 242 of the first 3G circuit unit 81 to the second 3G circuit unit 82 and is converted into an FP format by an FP processing unit 183. The converted data is stored in the internal RAM 241. The CPU 83, specifically, the FP setting processing unit 152 retrieves FP data in the process of operating upon interruptions at 2-ms intervals and stores the retrieved FP data in the external RAM 110 connected to the CPU 83.

The stored data is retrieved from the external RAM 110 by the IP processing unit 102 of the CPU 83, is converted into an IP format, and is stored again in the external RAM 110 as an IP packet. Data is transmitted to the base station host apparatus via an Ether physical layer (PHY) 100 with a coprocessor inside the CPU 83, such as the packet engine 101. If there is no coprocessor, an IP packet is transmitted to the base station host apparatus by the software process.

The CPU 83 accesses the second 3G circuit unit 82 in the process where a TTI is 10 ms, at 2-ms interruptions common to the HSDPA process and downlink legacy process. This does not increase the number of interruptions and thus does not increase internal RAMs. This leads to an effect that the circuit size and processing load can be reduced.

While FIGS. 20 to 23 show the uplink legacy process, as to an EUL, the process is performed similarly to the legacy process except for that the CPU 83 retrieves FP data from the second 3G circuit unit 82 at 2-ms intervals.

### Third Embodiment

FIG. 24 is a sequence diagram showing an operating procedure of the legacy (abbreviated as LG) process in the control frame process in a case where an external RAM is connected to the second 3G circuit unit 82. For the processes shown in FIG. 24, the description common to the same processes shown in FIG. 3 is not given.

In the processes shown in FIG. 24, the processes from the IP process in Step S11 to storing of a pointer queue in Step S12, division of segments in Step S13, and to storing of FP data in the second 3G circuit connected external RAM in Step S14 are performed within a fifty-first processing time t51 determined in advance. The fifty-first processing time t51 is, for example, 10 ms. The time of IP fluctuations is, for example, 390 ms.

In the processes shown in FIG. 24, the processes from the FP header analysis in Step S15 to the frame CRC check process in Step S101, storing of control frame information in the built-in processor register in Step S102, and to the control frame process in Step S103 are performed within a fifty-second processing time t52 determined in advance. The fifty-second processing time t52 is, for example, 10 ms.

In the processes shown in FIG. 24, the processes from the control frame process in Step S103 to storing of control frame information in the built-in processor register in Step S104, effective flag monitoring process in Step S105, calculation of frame CRC in Step S106, framing process in Step S107, process of storing a pointer queue in Step S108, and to the IP process in Step S109 are performed within a fifty-third processing time t53 determined in advance. The fifty-third processing time t53 is, for example, 10 ms.

The LG process shown in FIG. 24 is performed as follows. The processes of Steps S11 to S15 are performed in a similar manner to the processes shown in FIG. 3 described above, and then, in Step S101, the FP unit 56 of the second 3G circuit unit 82 performs a frame CRC check process. Next, in Step S102, the FP unit 56 stores control frame information in the built-in processor register of the first 3G circuit unit 81.

Next, in Step S103, the built-in processor of the first 3G circuit unit 81 performs the control frame process. Next, in Step S104, the built-in processor of the first 3G circuit unit 81 stores control frame information after the control frame process in the built-in processor register of the first 3G circuit unit 81.

Next, in Step S105, the FP unit 56 of the second 3G circuit unit 82 monitors an effective flag. The FP unit 56 of the second 3G circuit unit 82 always monitors, as the effective flag, the control frame information stored in the built-in processor register of the first 3G circuit unit 81. When a built-in processor performs the control frame process, the flag is set per corresponding control frame in the control frame information.

Next, in Step S106, the FP unit 56 calculates a frame CRC. The frame CRC is calculated when the FP unit 56 checks that a flag is set per corresponding control frame of the control frame information in Step S105. The FP unit 56 obtains the processed control frame data from the built-in processor register, and a frame CRC calculation unit calculates an FP frame CRC described in References 4 and 5 mentioned above.

Next, in Step S107, the FP unit 56 performs the framing process. The framed data is provided to the IP unit 58 of the second 3G circuit unit 82 through the process of storing a pointer queue in the FIFO for IP unit I/F in Step S108. Next, in Step S109, the IP unit 58 performs an IP process.

FIG. 25 is a sequence diagram showing an operating procedure of a legacy (abbreviated as LG) process in a control frame process in a case where an external RAM is connected to the CPU 83. For the processes shown in FIG. 25, the description common to the same processes shown in FIGS. 4 and 24 described above is not given.

The processes from the IP process in Step S31 to division of segments in Step S32 and to storing of FP data in the CPU connected external RAM in Step S33 are performed within a fifty-fourth processing time t54 determined in advance. The fifty-fourth processing time t54 is, for example, 10 ms. The time of IP fluctuations is, for example, 390 ms.

In the processes shown in FIG. 25, the processes from FP header setting in Step S34 to storing of an FP header in the built-in RAM in Step S35, FP header analysis in Step S36, the frame CRC check process in Step S111, storing of control frame information in the built-in processor register in Step S112, and to the control frame process in Step S113 are performed within a fifty-fifth processing time t55 determined in advance. The fifty-fifth processing time t55 is, for example, 10 ms.

In the processes shown in FIG. 25, the processes from the control frame process in Step S113 to storing of control frame information in the built-in processor register in Step S114, an effective flag monitoring process in Step S115, frame CRC calculation in Step S116, framing process in Step S117, process of storing FP data in the built-in RAM in Step S118, and to the IP process in Step S119 are performed within a fifty-sixth processing time t56 determined in advance. The fifty-sixth processing time t56 is, for example, 10 ms.

The LG process shown in FIG. 25 is performed as follows. The processes of Steps S31 to S36 are performed similarly to the processes shown in

FIG. 3 described above, and then, in Step S111, the main circuit of the second 3G circuit unit 82, specifically, the FP unit 56 performs the frame CRC check process. Next, in Step S112, the main circuit of the second 3G circuit unit 82, specifically, the FP unit 56 stores control frame information in the built-in processor register of the first 3G circuit unit 81.

Next, in Step S113, the built-in processor of the first 3G circuit unit 81 performs the control frame process. Next, the built-in processor of the first 3G circuit unit 81 stores the control frame information after the control frame process in the built-in processor register of the first 3G circuit unit 81.

Next, in Step S115, the main circuit of the second 3G circuit unit 82, specifically, the FP unit 56 monitors an effective flag. After checking that a flag is set per corresponding control frame in the control frame information in Step S115, in Step S116, the main circuit of the second 3G circuit unit 82, specifically, the FP unit 56 calculates a frame CRC. Next, in Step S117, the main circuit of the second 3G circuit unit 82, specifically, the FP unit 56 performs the framing process.

Next, in Step S118, the main circuit of the second 3G circuit unit 82, specifically, the FP unit 56 stores the framed data in the built-in RAM. Next, in Step S119, the CPU 83 obtains the framed data from the built-in RAM and performs the IP process.

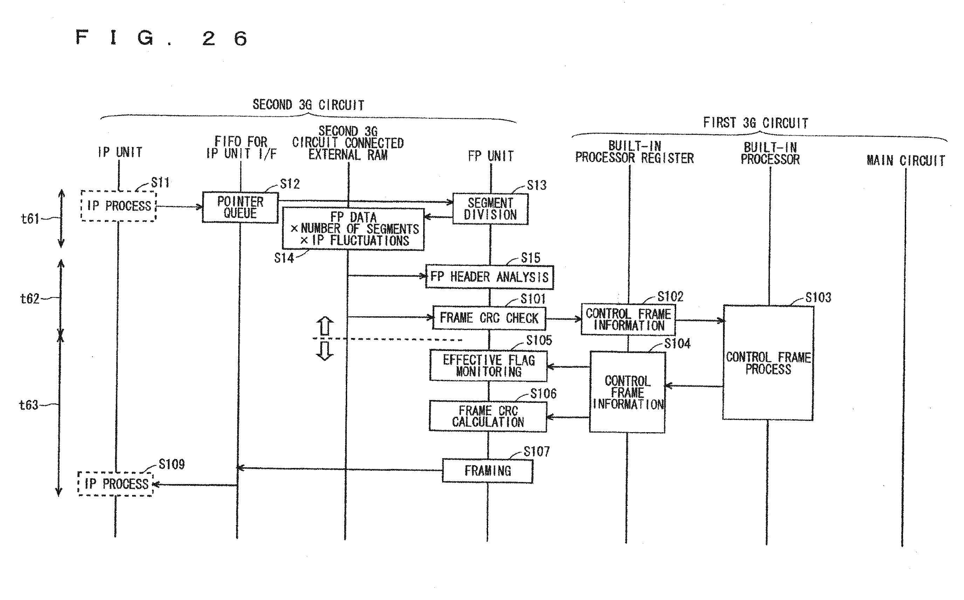

FIG. 26 is a sequence diagram showing another example of the operating procedure of the LG process in the control frame process in a case where an external RAM is connected to the second 3G circuit unit 82. For the processes shown in FIG. 26, the description common to the same processes shown in FIGS. 3 and 24 is not given.

In the processes shown in FIG. 26, the processes from the IP process in Step S11 to the storing of a pointer queue in Step S12, division of segments in Step S13, and to storing ofFP data in the second 3G circuit connected external RAM in Step S14 are performed within a sixty-first processing time t61 determined in advance. The sixty-first processing time t61 is, for example, 10 ms. The time of IP fluctuations is, for example, 390 ms.

In the processes shown in FIG. 26, the processes from the FP header analysis in Step S15 to the frame CRC check process in Step S101, storing of control frame information in the built-in processor register in Step S102, and to the control frame process in Step S103 are performed within a sixty-second processing time determined in advance. The sixty-second processing time is, for example, 10 ms.

In the processes shown in FIG. 26, the processes from the control frame process in Step S103 to storing of control frame information in the built-in processor register in Step S104, the effective flag monitoring process in Step S105, frame CRC calculation in Step S106, framing process in Step S107, and to the IP process in Step S109 are performed within a sixty-third processing time t63 determined in advance. The sixty-third processing time t63 is, for example, 10 ms.

While the LG process shown in FIG. 26 is performed similarly to the LG process shown in FIG. 24 described above, in the process shown in FIG. 26, in Step S107, the FP unit 56 performs the framing process and then provides the framed data to the IP unit 58 of the second 3G circuit unit 82 through the FIFO for IP unit I/F, not through the pointer queue. In the LG process shown in FIG. 26, the processes before Step S102 are independent of the processes after Step S104.

FIG. 27 is a sequence diagram showing an operating procedure in a case where an external RAM is connected to the CPU 83 and the CPU 83 and second 3G circuit unit 82 are caused to perform all of the control process. For the processes shown in FIG. 27, the description common to the same processes shown in FIG. 4 described above is not given.

In the processes shown in FIG. 27, the processes from the IP process in Step S31 to division of segments in Step S32 and to storing of FP data in the CPU connected external RAM in Step S33 are performed within a sixty-fourth processing time t64 determined in advance. The sixty-fourth processing time t64 is, for example, 10 ms. The time of IP fluctuations is, for example, 390 ms.

In the processes shown in FIG. 27, the processes from FP header setting in Step S34 to storing of FP header in the built-in RAM in Step S35, FP header analysis in Step S36, frame CRC check process in Step S121, storing of control frame information in Step S122, and to the control frame process in Step S123 are performed within a sixty-fifth processing time t65 determined in advance. The sixty-fifth processing time t65 is, for example, 10 ms.

In the processes shown in FIG. 27, the processes from the control frame process in Step S123 to storing of control frame information in Step S124, effective flag monitoring process in Step S125, frame CRC calculation in Step S126, framing process in Step S127, process of storing FP data in the built-in RAM in Step S128, and to the IP process in Step S129 are performed within a sixty-sixth processing time t66 determined in advance. The sixty-sixth processing time t66 is, for example, 10 ms.

The LG process shown in FIG. 27 is performed as follows. The processes of Steps S31 to S36 are performed similarly to the processes shown in FIG. 3 described above, and then, in Step S121, the main circuit of the second 3G circuit unit 82, specifically, the FP unit 56 performs the frame CRC check process. Next, in Step S112, the main circuit of the second 3G circuit unit 82, specifically, the FP unit 56 stores the control frame information in the built-in RAM of the second 3G circuit unit 82.

Next, in Step S123, the CPU 83 performs the control frame process. Next, the CPU 83 stores the control frame information after the control frame process in the built-in RAM of the second 3G circuit unit 82.

Next, in Step S125, the main circuit of the second 3G circuit unit 82, specifically, the FP unit 56 monitors an effective flag. After checking that a flag is set per corresponding control frame type of the control frame information in Step S125, in Step S126, the main circuit of the second 3G circuit unit 82, specifically, the FP unit 56 calculates a frame CRC.

Next, in Step S127, the main circuit of the second 3G circuit unit 82, specifically, the FP unit 56 performs the framing process. Next, in Step S128, the main circuit of the second 3G circuit unit 82, specifically, the FP unit 56 stores the framed data in the built-in RAM. Next, in Step S129, the CPU 83 obtains the framed data from the built-in RAM and then performs the IP process.

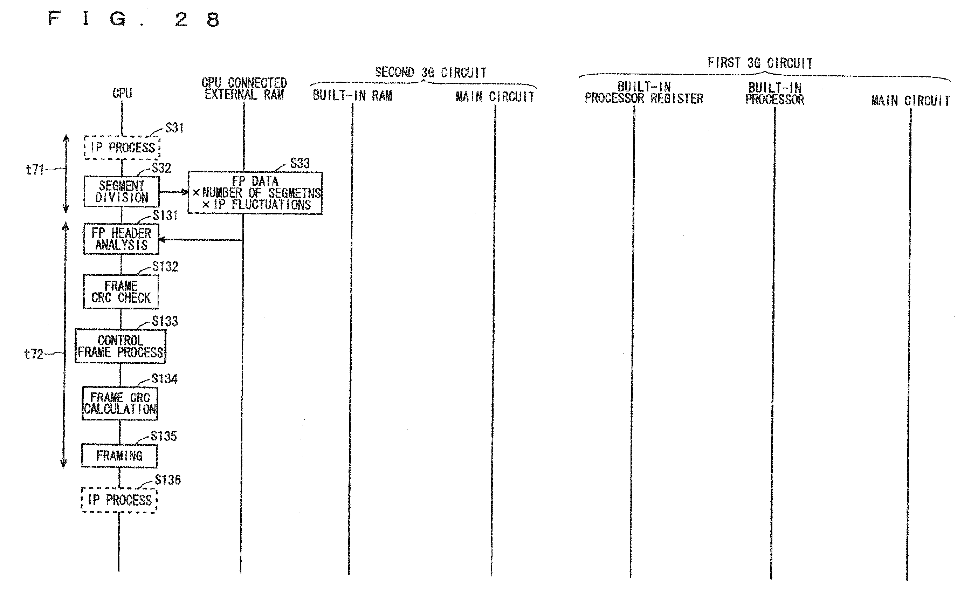

FIG. 28 is a sequence diagram showing an operating procedure in a case where the CPU 83 is connected with an external RAM to perform all of the control process. For the processes shown in FIG. 28, the description common to the same processes shown in FIG. 4 described above is not given.

In the processes shown in FIG. 28, the processes from the IP process in Step S31 to division of segments in Step S32 and to storing of the FP data in the CPU connected external RAM in Step S33 are performed within a seventy-fourth processing time t74 determined in advance. The seventy-fourth processing time t74 is, for example, 10 ms. The time of IP fluctuations is, for example, 390 ms.

In the processes shown in FIG. 28, the processes from the FP header analysis in Step S131 to the frame CRC check process in Step S132, the control frame process in Step S133, the frame CRC calculation in Step S134, the framing process in Step S135, and to the IP process in Step S136 are performed within a seventy-sixth processing time t76 determined in advance. The seventy-sixth processing time t76 is, for example, 10 ms.

The LG process shown in FIG. 28 is performed as follows. The processes of Steps S31 to S36 are performed similarly to the processes shown in FIG. 3 described above, and then, in Step S131, the CPU 83 performs the FP header analysis process. Next, in Step S132, the CPU 83 performs the frame CRC check process. Next, in Step S133, the CPU 83 performs the control frame process.

Next, in Step S134, the CPU 83 calculates a frame CRC. Next, in Step S135, the CPU 83 performs the framing process. Next, in Step S136, the CPU 83 performs the IP process on the framed data.

As described above, in the processes shown in FIGS. 25 and 27, the framed data is passed to the CPU 83 via the built-in RAM of the second 3G circuit unit 82. The CPU 83 accesses the second 3G circuit unit 82 to set data therein or obtain data therefrom in the processes activated upon interruptions at 2-ms intervals same as those in FIGS. 3 to 7 and FIGS. 18 and 19.

In the processes shown in FIG. 27, in order to carry out the FP header setting and control frame process in the CPU 83 and the processes such as FP header analysis and frame CRC check in the second 3G circuit unit 82, a long time is consumed when the CPU 83 and second 3G circuit unit 82 exchange the data that is a dominant requirement for the processing load of the CPU 83.

Meanwhile, if the processes are all performed by the CPU 83 as in the processes shown in FIG. 28, a data exchange between the CPU 83 and second 3G circuit unit 82 is not necessary, leading to a shorter processing time.

It is conceivable that the processing load of the CPU 83 will increase if the functions are transferred to the CPU 83. However, the control frame has a small data length, which is about 5 bytes, and thus, the processing load that increases when the functions are transferred to the CPU 83 can be canceled sufficiently in the processing time that becomes shorter thanks to no access between the CPU 83 and second 3G circuit unit 82.

The second 3G circuit unit 82 needs not to perform processes, which reduces the circuit size of the second 3G circuit unit 82, resulting in reductions in size and power consumption of the base station device 2.

### Fourth Embodiment

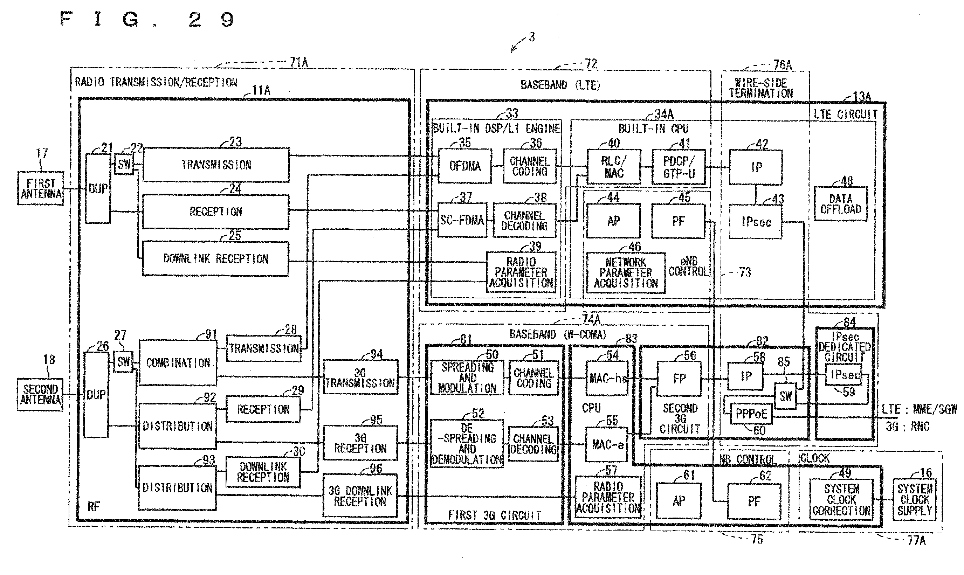

FIG. 29 is a block diagram showing a configuration of a base station device 3 according to a fourth embodiment of the present invention. The configuration of the base station device 3 in this embodiment is similar to the configuration of the base station device 2 in the first embodiment shown in FIG. 2 described above, and thus, the portions corresponding to those of the first embodiment shown in FIG. 2 are denoted by the same reference symbols and common description is not given.

The base station device 3 of this embodiment includes an RF unit 11A, an LTE circuit unit 13A, a system clock supply unit 16, a first antenna 17, a second antenna 18, a first 3G circuit unit 81, a second 3G circuit unit 82, a CPU 83, and an IPsec dedicated circuit unit 84.

The LTE circuit unit 13A, first 3G circuit unit 81, second 3G circuit unit 82, CPU 83, and IPsec dedicated circuit unit 84 have the same configurations as those of the LTE circuit unit 13A, first 3G circuit unit 81, second 3G circuit unit 82, CPU 83, and IPsec dedicated circuit unit 84 of the base station device 2 in the first embodiment. The first 3G circuit unit 81 and second 3G circuit unit 82 may be configured as one circuit.

The RF unit 11A of the this embodiment includes a first DUP unit 21, a first SW unit 22, a first radio transmission unit 23, a first radio reception unit 24, a first downlink radio reception unit 25, a second DUP unit 26, a second SW unit 27, a second radio transmission unit 28, a second radio reception unit 29, a second downlink radio reception unit 30, a combining unit 91, a first distribution unit 92, a second distribution unit 93, a radio transmission unit for 3G 94, a radio reception unit for 3G 95, and a downlink radio reception unit for 3G 96. The RF unit 11A of this embodiment constitutes a radio transmission/reception unit 71A.

The base station device 3 of this embodiment has the same configuration as that of the base station device 2 in the first embodiment described above except for the RF unit 11A constituting the radio transmission/reception unit 71A. The RF unit 11A of this embodiment has no DFE.

This embodiment has a configuration including the first antenna 17, second antenna 18, first duplexer (abbreviated as DUP) unit 21, first SW unit 22, first radio transmission unit 23, first radio reception unit 24, first downlink radio reception unit 25, second DUP unit 26, second SW unit 27, second radio transmission unit 28, second radio reception unit 29, second downlink radio reception unit 30, combining unit 91, first distribution unit 92, second distribution unit 93, radio transmission unit for 3G 94, radio reception unit for 3G 95, and downlink radio reception unit for 3G 96.

The radio transmission unit for 3G 94 up-converts a signal of the W-CDMA system after the spreading and modulation to an RF signal. The radio reception unit for 3G 95 down-converts an RF signal of the W-CDMA system and performs A/D conversion. The downlink radio reception unit for 3G 96 down-converts an RF signal having a downlink frequency of the W-CDMA system and performs A/D conversion.

The combining unit 91 is an analog filter that has a band limiting function of arranging RF signals of the LTE system output from the second radio transmission unit 28 and RF signals of the W-CDMA system output from the radio transmission unit for 3G 94 in order of frequencies without an overlap of frequency bands. The first and second distribution units 92 and 93 are analog filters that separate the RF signals into the signals passing through a 3G band and the signals passing through an LTE band.

As described above, in this embodiment, the FP unit 56, IP unit for 3G 58, IPsec unit 59, and PPPoE unit 60 are configured as circuits separate from the CPU 83 as in the first embodiment described above, allowing the MAC-hs unit 54 and MAC-e unit 55 to be configured so as to obtain parameters and perform only a scheduling function such as transmission speed control, not to pass user data. As a result, as shown in FIG. 29, a path for the 3G-side user data can be configured only by a circuit, resulting in a reduction in software processing load.

The first embodiment is configured such that the DFE unit 31 is used to combine or distribute signals at digital baseband frequency bands, while in this embodiment, 3G signals and LTE signals are combined or distributed at analog radio frequencies (RFs) without using a DFE circuit unit. As a result, compared with a case in which signals are combined or distributed at digital baseband frequencies, an increase in errors can be prevented in combining signals. In distributing signals, the 3G signals and LTE signals are separated before down conversion, preventing mixing of an interference wave and mixing of noise in down conversion.

While this embodiment cannot achieve such an effect that one RF system can be reduced as described in the first to third embodiments above, the other effects similar to those of the first to third embodiments described above can be achieved.

### Fifth Embodiment

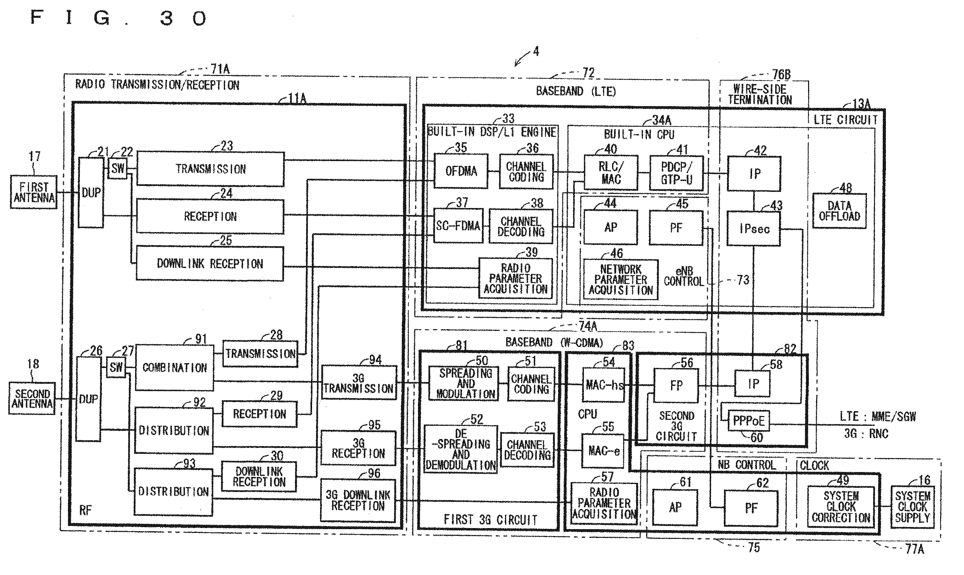

FIG. 30 is a block diagram showing a configuration of a base station device 4 according to a fifth embodiment of the present invention. The configuration of the base station device 4 in this embodiment is similar to the configuration of the base station device 3 in the fourth embodiment shown in FIG. 29 described above, and thus, the portions corresponding to the fourth embodiment shown in FIG. 29 are denoted by the same reference symbols, and common description is not given.

The base station device 4 of this embodiment has a configuration obtained by removing the IPsec dedicated circuit unit 84 and change-over SW unit 85 from the configuration of the base station device 3 of the fourth embodiment described above. In the configuration of this embodiment, the IPsec unit for LTE 43 of the built-in CPU 34A of the LTE circuit unit 13A and the IP unit for 3G 58 of the second 3G circuit unit 82 are connected.

This embodiment can achieve effects similar to those of the fourth embodiment. In the fourth embodiment, the IPsec dedicated circuit unit 84 is provided as an IPsec unit for 3G and the IPsec function in the 3G system is achieved by the IPsec dedicated circuit unit 84. Meanwhile, in this embodiment, the IPsec function in the 3G system is achieved with the IPsec unit for LTE 43 without providing the IPsec dedicated circuit unit 84 and change-over SW unit 85. This simplifies the configuration of the base station device 4, miniaturizing the base station device 4.

While the invention has been shown and described in detail, the foregoing description is in all aspects illustrative and not restrictive. It is therefore understood that numerous modifications and variations can be devised without departing from the scope of the invention.

### Description of Reference Symbols

- 1: base station device
- 2: base station device
- 3: base station device
- 4: base station device
- 13: LTE circuit unit
- 13A: LTE circuit unit
- 15: CPU
- 56: FP unit
- 58: IP unit for 3G
- 71: radio transmission/reception unit
- 71A: radio transmission/reception unit
- 81: first 3G circuit unit
- 82: second 3G circuit unit
- 83: CPU.

## Claims

1. A base station device configured to perform radio communication with a communication terminal device, comprising:
- a communication processing unit that is adapted to perform a communication process to communicate with the communication terminal device; and
- a data exchange unit that is adapted to perform at least one of reading and storing of data from and in an external storage that temporarily stores the data, to thereby exchange the data with the communication processing unit, the data being handled in the communication process by the communication processing unit,
wherein the data exchange unit is implemented by a software program.

2. The base station device according to claim 1,
wherein the communication process includes a plurality of processes in different processing blocks,
wherein the data exchange unit is adapted to be activated in response to an interrupt signal provided from the communication processing unit, and wherein the interrupt signal is shared among the plurality of processes.

3. The base station device according to claim 1,
wherein the communication process includes a process of framing a frame protocol.

4. The base station device according to claim 1,
wherein the base station device is configured to perform radio communication with the communication terminal device in different first and second communication systems, and
wherein the communication processing unit includes:
- a first communication processing unit that is adapted to perform a communication process to communicate with the communication terminal device in the first communication system; and
- a second communication processing unit that is adapted to perform a communication process to communicate with the communication terminal device in the second communication system.

5. A communication system, comprising:
- the base station device according to any one of claims 1 to 4; and
- a communication terminal device configured to perform radio communication with the base station device.
